# EUROPEAN PATENT APPLICATION

(11) **EP 4 845 258 A1**
(43) Date of publication of application: **25.11.2026**
(21) Application number: 24921603.7
(22) Date of filing: 06.11.2024
(51) Int. Cl.: H04W 72/044

(54) **POWER CONTROL METHOD AND APPARATUS**

(30) Priority: 31.01.2024 CN 202410139337
(71) Applicant: Huawei Technologies Co., Ltd., Shenzhen, Guangdong 518129 (CN)
(72) Inventor: ZHANG, Yi, Shenzhen, Guangdong 518129 (CN); YI, Feng, Shenzhen, Guangdong 518129 (CN); XU, Jiaojiao, Shenzhen, Guangdong 518129 (CN); SU, Hongjia, Shenzhen, Guangdong 518129 (CN)
(74) Representative: Huawei European IPR
(86) International application number: PCT/CN2024/130140
(87) International publication number: WO 2025/161579

(57) **Abstract**

A power control method and apparatus are provided, which can determine the transmit power of a sensing signal to implement the transmission of the sensing signal, and can flexibly adjust the transmit power of the sensing signal and the communication signal. The method includes: determining, by a terminal, a first transmit power and a second transmit power, and transmitting a sensing signal on a first time unit based on the first transmit power, and transmitting a communication signal on the first time unit based on the second transmit power, where the first transmit power and the second transmit power meet a constraint of a maximum transmit power of the terminal. The first transmit power is a transmit power obtained by adjusting a third transmit power by using a first power control factor, and the second transmit power is a transmit power obtained by adjusting a fourth transmit power by using a second power control factor. The third transmit power is a transmit power that considers a first path loss (for example, a sensing path loss), or a transmit power that considers an expected transmit power of the sensing signal. The fourth transmit power is a transmit power that considers a second path loss (for example, a communication path loss).

## Description

This application claims priority to Chinese Patent Application No. 202410139337.4, filed with the China National Intellectual Property Administration on January 31, 2024, and entitled "Power Control Method and Apparatus," which is incorporated herein by reference in its entirety.

### Technical Field

Embodiments of this application relate to the communication field, and in particular, to a power control method and apparatus.

### Background Technology

Integrated Sensing and Communication (ISAC) is one of the key scenarios in sixth-generation (6G) mobile communications. ISAC achieves cost reduction and enhanced system performance by sharing software and hardware resources within the same system to simultaneously provide high-quality communication and high-precision sensing capabilities. The communication function can be understood as traditional data transmission, while the sensing function includes distance measurement, speed measurement, angle measurement, imaging, detection, and more.

With the development of ISAC technology, the ability to perform both communication and sensing functions will become a trend for future base stations and terminals. This means that terminals may need to transmit both communication signals and sensing signals. In this scenario, how to determine the transmit power of the sensing signal is an urgent issue that needs to be addressed.

### Summary of the Invention

This application provides a power control method and apparatus, which can determine the transmit power of a sensing signal, thereby enabling the transmission of the sensing signal.

According to a first aspect, a communication method is provided. The method may be performed by a first communications apparatus, or may be performed by a component of the first communications apparatus, for example, a processor, a chip, or a chip system of the first communications apparatus, or may be implemented by a logic module or software that can implement all or some functions of the first communications apparatus. The first communications apparatus may be a terminal, that is, the method may be performed by a terminal or a component of the terminal, for example, a processor, a chip, or a chip system, or may be implemented by a logic module or software that can implement some or all functions of the terminal. The method includes: determining a first transmit power and a second transmit power, and sending a sensing signal on a first time unit based on the first transmit power, and sending a communication signal on the first time unit based on the second transmit power, where a sum of the first transmit power and the second transmit power is less than or equal to a maximum transmit power of the terminal. The first transmit power is a product of a first power control factor and a third transmit power, and the second transmit power is a product of a second power control factor and a fourth transmit power. The third transmit power is determined based on the maximum transmit power of the terminal and a fifth transmit power, where the fifth transmit power is determined based on a first path loss, or the fifth transmit power is an expected transmit power of the sensing signal. The fourth transmit power is determined based on the maximum transmit power of the terminal and a second path loss.

Based on this solution, the first communication apparatus may determine the transmit power of the sensing signal, thereby implementing the transmission of the sensing signal. In addition, the first communication apparatus uses the product of the first power control factor and the third transmit power as the transmit power of the sensing signal (that is, the first transmit power), and uses the product of the second power control factor and the fourth transmit power as the transmit power of the communication signal (that is, the second transmit power). In this way, the transmit power of the sensing signal and the communication signal can be dynamically and flexibly adjusted through the first power control factor and the second power control factor, so that the sum of the first transmit power and the second transmit power meets the maximum transmit power constraint of the terminal, thereby implementing simultaneous transmission of the sensing signal and the communication signal, and meeting a requirement for simultaneous sensing and communication.

In a possible design, the third transmit power satisfies the following relationship: ${P}_{sense} \left(i\right) = min \left({P}_{CMAX}, {P}_{sense , PL}\left(i\right)\right)$
where *Pₛₑₙₛₑ*(*i*) represents the third transmit power, *i* represents an index of the first time unit, *P_{CMAX}* represents the maximum transmit power of the terminal, *P*_{*sense*,*PL*}(*i*) represents the fifth transmit power, and min () represents a minimum-value operation.

In a possible design, the third transmit power is determined based on the maximum transmit power of the terminal, the fifth transmit power, and the sixth transmit power. The sixth transmit power is determined based on at least one of a channel busy ratio (CBR), a channel utilization rate (CR), or a sensing priority.

Based on this possible design, at least one of the CBR, the CR, or the sensing priority is considered when determining the transmit power of the sensing signal, so that the design can be applied to a scenario of integrated sensing and communication in a distributed system, thereby improving accuracy of the determined transmit power in this scenario, and ensuring communication and sensing performance.

In a possible design, the third transmit power satisfies the following relationship: ${P}_{sense} \left(i\right) = min \left({P}_{CMAX},{P}_{sense , C},{P}_{sense , PL}\left(i\right)\right)$
where *Pₛₑₙₛₑ*(*i*) represents the third transmit power, *i* represents an index of the first time unit, *P_{CMAX}* represents the maximum transmit power of the terminal, *P*_{*sense*,*PL*}(*i*) represents the fifth transmit power, *P*_{*sense*,*C*} represents the sixth transmit power, and min () represents a minimum-value operation.

In a possible design, the fifth transmit power is determined based on the first path loss and at least one of the following: first expected received power on a single resource block RB, first path loss compensation factor, a quantity of resource blocks RB occupied by the sensing signal, a first subcarrier configuration factor, or a first closed-loop power control parameter.

Based on this possible design, the transmit power of the sensing signal is determined by considering closed-loop power control, so that the RAN node can adjust the transmit power of the terminal, thereby improving accuracy and reasonableness of the determined transmit power, and thus ensuring communication and sensing performance.

In a possible design, the fifth transmit power satisfies the following relationship: ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense} + {f}_{sense}$

Alternatively, ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense}$
where *P*_{*sense*,*PL*}(*i*) represents the fifth transmit power, *i* represents an index of the first time unit, *P*_{0,*sense*} represents first expected received power on a single RB, *µ*1 represents a first subcarrier configuration factor, ${M}_{RB}^{sense} \left(i\right)$ represents a quantity of RBs occupied by the sensing signal in time unit *i, αₛₑₙₛₑ* represents a first path loss compensation factor, *PLₛₑₙₛₑ* represents a first path loss, and *fₛₑₙₛₑ* represents a first closed-loop power control parameter.

In a possible design, the fourth transmit power is determined based on a maximum transmit power of the terminal, the second path loss, and at least one of the following: a second expected received power on a single RB, a second path loss compensation factor, a quantity of RBs occupied by the communication signal, a second subcarrier configuration factor, a second closed-loop power control parameter, or a power offset value, where the power offset value is determined by a modulation and coding scheme (MCS) of the communication signal.

In a possible design, when the sum of the third transmit power and the fourth transmit power is greater than the maximum transmit power of the terminal and the communication priority is higher than the sensing priority, the determining the first transmit power includes: adjusting the first power control factor, so that the sum of the first transmit power and the second transmit power is less than or equal to the maximum transmit power of the terminal. Alternatively, when the sum of the third transmit power and the fourth transmit power is greater than the maximum transmit power of the terminal and the communication priority is lower than the sensing priority, the determining the second transmit power includes: adjusting the second power control factor, so that the sum of the first transmit power and the second transmit power is less than or equal to the maximum transmit power of the terminal.

Based on this possible design, the first communication apparatus may adjust the first power control factor or the second power control factor based on the priority, thereby dynamically and flexibly adjusting the transmit power of the sensing signal and the communication signal, so that the sum of the first transmit power and the second transmit power meets the constraint of the maximum transmit power of the terminal. In addition, adjusting the power control factor of the low-priority signal based on the priority can ensure the transmit power of the high-priority signal, thereby ensuring performance of the high-priority signal.

In a possible design, when the sensing priority is higher than the communication priority, the difference between the first transmit power and the second transmit power is greater than or equal to a first threshold. Alternatively, when the communication priority is higher than the sensing priority, the difference between the second transmit power and the first transmit power is greater than or equal to a second threshold.

Based on this possible design, it can be ensured that the difference between the transmit power of the high-priority signal and the transmit power of the low-priority signal is greater than or equal to the threshold, thereby reducing interference of the low-priority signal to the high-priority signal and ensuring the transmission performance of the high-priority signal.

According to a second aspect, a communication method is provided. The method may be performed by a first communication apparatus, or may be performed by a component of the first communication apparatus, for example, a processor, a chip, or a chip system of the first communication apparatus, or may be implemented by a logical module or software that can implement all or a part of the functions of the first communication apparatus. The first communication apparatus may be a terminal, that is, the method may be performed by a terminal or a component of the terminal, such as a processor, a chip, or a chip system, or may be implemented by a logical module or software that can implement all or a part of the functions of the terminal. The method includes: determining a first transmit power and a second transmit power, and sending a sensing signal on a first time unit based on the first transmit power, and sending a communication signal on the first time unit based on the second transmit power, where the sum of the first transmit power and the second transmit power is less than or equal to a maximum transmit power of the terminal. When the sensing priority is higher than the communication priority, the first transmit power is determined based on the maximum transmit power of the terminal and a third transmit power, where the third transmit power is determined based on the first path loss, or the third transmit power is an expected transmit power of the sensing signal, and the second transmit power is a difference between the maximum transmit power of the terminal and the first transmit power. Alternatively, when the communication priority is higher than the sensing priority, the first transmit power is a difference between the maximum transmit power of the terminal and the second transmit power, and the second transmit power is determined based on the maximum transmit power of the terminal and a second path loss.

Based on this solution, the first communication apparatus may determine the transmit power of the sensing signal, thereby implementing the transmission of the sensing signal. In addition, the first communication apparatus first determines the transmit power of the high-priority signal based on the priority, and uses the remaining power as the transmit power of the low-priority signal, so that the sum of the first transmit power and the second transmit power meets the maximum transmit power constraint of the terminal, thereby implementing simultaneous transmission of the sensing signal and the communication signal, and meeting a requirement for simultaneous sensing and communication.

In a possible design, the first transmit power satisfies the following relationship: ${P}_{sense} \left(i\right) = min \left({P}_{CMAX}, {P}_{sense , PL}\left(i\right)\right)$
where *Pₛₑₙₛₑ*(*i*) represents the first transmit power, *i* represents an index of the first time unit, *P_{CMAX}* represents the maximum transmit power of the terminal, *P_{sense,PL}*(*i*) represents the third transmit power, and min() represents a minimum-value operation.

In a possible design, the first transmit power is determined based on the maximum transmit power of the terminal, the third transmit power, and the fourth transmit power. The fourth transmit power is determined based on at least one of a channel busy ratio CBR, a channel utilization rate CR, or a sensing priority.

In a possible design, the first transmit power satisfies the following relationship: ${P}_{sense} \left(i\right) = min \left({P}_{CMAX},{P}_{sense , C},{P}_{sense , PL}\left(i\right)\right)$
where *Pₛₑₙₛₑ*(*i*) represents the first transmit power, *i* represents an index of the first time unit, *P_{CMAX}* represents the maximum transmit power of the terminal, *P*_{*sense*,*PL*}(*i*) represents the third transmit power, *P*_{*sense*,*C*} represents the fourth transmit power, and min () represents a minimum-value operation.

In a possible design, the third transmit power is determined based on the first path loss and at least one of the following: first expected received power on a single resource block RB, first path loss compensation factor, a quantity of RBs occupied by the sensing signal, a first subcarrier configuration factor, or a first closed-loop power control parameter.

In a possible design, the third transmit power satisfies the following relationship: ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense} + {f}_{sense}$
or, ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense}$
where *P*_{*sense*,*PL*}(*i*) represents the third transmit power, *i* represents an index of the first time unit, *P*_{0,*sense*} represents first expected received power on a single RB, *µ*1 represents a first subcarrier configuration factor, ${M}_{RB}^{sense} \left(i\right)$ represents a quantity of RBs occupied by the sensing signal in time unit *i, αₛₑₙₛₑ* represents a first path loss compensation factor, *PLₛₑₙₛₑ* represents a first path loss, and *fₛₑₙₛₑ* represents a first closed-loop power control parameter.

In a possible design, the second transmit power is determined based on a maximum transmit power of the terminal, the second path loss, and at least one of the following: a second expected received power on a single RB, a second path loss compensation factor, a quantity of RBs occupied by the communication signal, a second subcarrier configuration factor, a second closed-loop power control parameter, or a power offset value, where the power offset value is determined by a modulation and coding scheme (MCS) of the communication signal.

In a possible design, when the sensing priority is higher than the communication priority, the second transmit power satisfies the following relationship: ${P}_{comm} \left(i\right) = {P}_{CMAX} - {P}_{sense} \left(i\right)$

Alternatively, when the communication priority is higher than the sensing priority, the first transmit power satisfies the following relationship: ${P}_{sense} \left(i\right) = {P}_{CMAX} - {P}_{comm} \left(i\right)$
where *P_{comm}*(*i*) represents the second transmit power, *P_{CMAX}* represents the maximum transmit power of the terminal, and *Pₛₑₙₛₑ*(*i*) represents the first transmit power.

In a possible design, when the sensing priority is higher than the communication priority, the first transmit power minus the second transmit power is greater than or equal to a first threshold. Alternatively, when the communication priority is higher than the sensing priority, the second transmit power minus the first transmit power is greater than or equal to a second threshold.

For technical effects brought by any possible design of the second aspect, refer to technical effects brought by corresponding designs in the first aspect. Details are not described herein again.

According to a third aspect, a communications apparatus is provided, configured to implement the methods. The communications apparatus includes modules, units, or means (means) corresponding to the implementations of the methods, where the modules, units, or means may be implemented by hardware, software, or hardware executing corresponding software. The hardware or software includes one or more modules or units corresponding to the functions.

In some possible designs, the communications apparatus may include a processing module and a transceiver module. The processing module may be configured to implement the processing functions in any one of the foregoing aspects and any possible implementation thereof. The transceiver module may include a receiving module and a sending module, which are configured to implement the receiving function and the sending function in any one of the foregoing aspects and any possible implementation thereof, respectively.

In some possible designs, the transceiver module may include a transceiver circuit, a transceiver machine, a transceiver, or a communication interface.

According to a fourth aspect, a communication apparatus is provided, including a processor and a memory. The memory is configured to store computer instructions, and when the processor executes the instructions, the communication apparatus is enabled to perform the method according to any one of the aspects.

According to a fifth aspect, a communication apparatus is provided, including a processor and a communication interface. The communication interface is configured to communicate with a module outside the communication apparatus. The processor is configured to execute a computer program or an instruction, so that the communication apparatus performs the method according to any one of the aspects.

According to a sixth aspect, a communication apparatus is provided, including at least one processor; and the processor is configured to execute a computer program or an instruction stored in a memory, so that the communication apparatus performs the method according to any one of the aspects. The memory may be coupled to the processor, or may be independent of the processor.

According to a seventh aspect, a communication apparatus (for example, the communication apparatus may be a chip or a chip system) is provided. The communication apparatus includes a processor, configured to implement the functions involved in any one of the first aspect or the second aspect.

In some possible designs, the communication apparatus includes a memory, and the memory is configured to store necessary program instructions and data.

In some possible designs, when the apparatus is a chip system, the apparatus may be formed by a chip, or may include a chip and another discrete component.

In a possible design, the communication apparatuses according to the third aspect to the seventh aspect may be the first communication apparatus in the first aspect or the second aspect, or an apparatus, for example, a chip or a chip system, included in the first communication apparatus.

According to an eighth aspect, a communication apparatus is provided. The communication apparatus may be the first communication apparatus, or may be a first communication apparatus, or may be a module or a unit (for example, a chip, a chip system, or a circuit) that is in the first communication apparatus and that is in a one-to-one correspondence with the method/operation/step/action described in the first aspect or the second aspect, or may be a module or a unit that can be used in conjunction with the first communication apparatus.

It may be understood that when the communication apparatus provided in any one of the third aspect to the eighth aspect is a chip, a sending action/function of the communication apparatus may be understood as outputting information, and a receiving action/function of the communication apparatus may be understood as inputting information.

According to a ninth aspect, a computer-readable storage medium is provided. The computer-readable storage medium stores a computer program or instructions, and when the computer program or instructions are run on a communications apparatus, the communications apparatus is enabled to perform the method according to any one of the first aspect or the second aspect.

According to a tenth aspect, a computer program product comprising instructions is provided. When the computer program product is run on a communications apparatus, the communications apparatus is enabled to perform the method according to any one of the first aspect or the second aspect.

According to an eleventh aspect, a communications system is provided. The communications system may include a first communications apparatus and a second communications apparatus. The first communications apparatus is configured to implement the method according to any one of the first aspect or the design manners of the first aspect, or the first communications apparatus is configured to implement the method according to any one of the second aspect or the design manners of the second aspect. The first communications apparatus is a terminal, and the second communications apparatus is a RAN node; or both the first communications apparatus and the second communications apparatus are terminals.

For technical effects achieved by the third aspect to the eleventh aspect and the design manners of the third aspect to the eleventh aspect, refer to technical effects achieved by the design manners of the first aspect or the second aspect. These are not described herein again.

### Description of the Drawings

FIG. 1 is a schematic diagram of a V2X scenario according to this application;
FIG. 2 is a schematic diagram of a scenario of a vehicle networking service according to this application;
FIG. 3 to FIG. 6 are schematic structural diagrams of a communications system according to this application;
FIG. 7 is a schematic flowchart of a power control method according to this application;
FIG. 8 is a schematic flowchart of another power control method according to this application;
FIG. 9 is a schematic structural diagram of a communications apparatus according to this application;
FIG. 10 is a schematic structural diagram of another communications apparatus according to this application;
FIG. 11 is a schematic structural diagram of still another communications apparatus according to this application.

### Specific Implementation Manners

In the descriptions of this application, unless otherwise specified, "/" indicates an "or" relationship between associated objects. For example, A/B may indicate A or B. The term "and/or" in this application merely describes an association relationship between associated objects, and indicates that three relationships may exist. For example, A and/or B may indicate the following three cases: only A exists, both A and B exist, and only B exists, where A and B may be singular or plural.

In the descriptions of this application, unless otherwise specified, "a plurality of" means two or more. "At least one of the following" or a similar expression thereof refers to any combination of these items, including any combination of singular or plural items. For example, "at least one of a, b, or c" may indicate: a, b, c, a-b, a-c, b-c, or a-b-c, where a, b, and c may be singular or plural.

In addition, to clearly describe the technical solutions in embodiments of this application, terms such as "first" and "second" are used in embodiments of this application to distinguish between identical items or similar items that have basically the same functions or purposes. A person skilled in the art may understand that the terms such as "first" and "second" do not limit a quantity or an execution sequence, and that the terms such as "first" and "second" do not indicate a definite difference.

In the embodiments of this application, terms such as "example" or "for example" are used to indicate an example, an illustration, or a description. Any embodiment or design solution described as "example" or "for example" in the embodiments of this application should not be construed as being more preferred or having more advantages than other embodiments or design solutions. Specifically, the use of terms such as "example" or "for example" is intended to present a related concept in a specific manner for ease of understanding.

It may be understood that the term "embodiment" mentioned throughout this specification means that a particular feature, structure, or characteristic associated with the embodiment is included in at least one embodiment of this application. Therefore, embodiments described in various places in this specification may not necessarily refer to the same embodiment. In addition, these particular features, structures, or characteristics may be combined in one or more embodiments in any suitable manner. It may be understood that the sequence numbers of the processes in the embodiments of this application do not mean an order of execution, and the execution order of the processes should be determined according to their functions and internal logic, without constituting any limitation on the implementation processes of the embodiments of this application.

It may be understood that, in this application, "when" and "if" each mean that a corresponding processing is performed under an objective condition, and do not limit time, nor require a determining action to be performed during implementation, nor imply any other limitation.

It may be understood that some optional features in embodiments of this application may be independently implemented in some scenarios without depending on another feature (for example, a solution on which the optional features are currently based), thereby resolving a corresponding technical problem and achieving a corresponding effect. Alternatively, in some scenarios, these optional features may be combined with another feature based on a requirement. Correspondingly, the apparatus provided in embodiments of this application may also implement these features or functions accordingly. Details are not described herein again.

In this application, unless otherwise specified, for parts that are the same or similar in embodiments, refer to each other. In embodiments of this application, unless otherwise specified or there is a logical conflict, terms and/or descriptions in different embodiments are consistent and may be mutually referenced, and technical features in different embodiments may be combined based on an internal logical relationship thereof, to form a new embodiment. The implementations of this application described below do not constitute a limitation on the protection scope of this application.

To facilitate understanding of the technical solutions in the embodiments of this application, the following first provides a brief introduction to related technologies in this application.

### 1. Cellular vehicle to everything (cellular vehicle to everything, C-V2X):

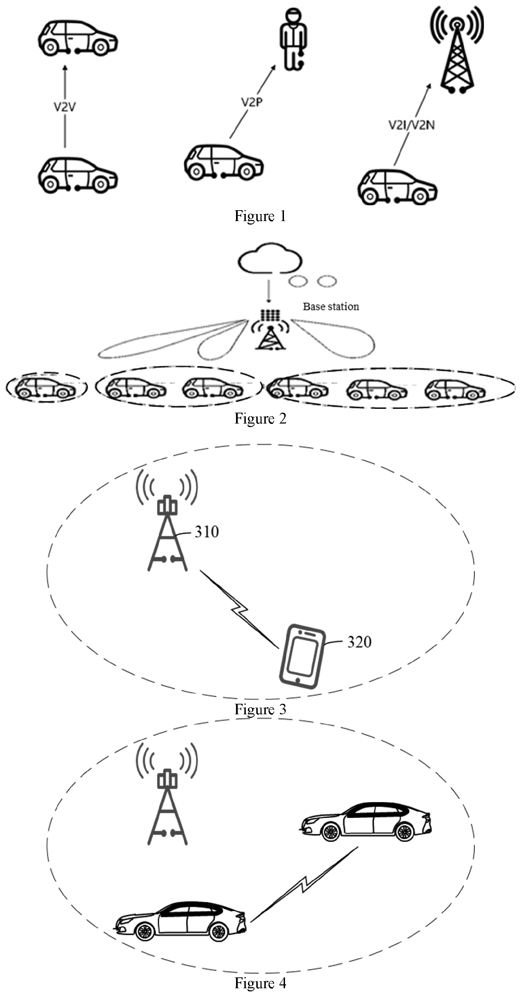

C-V2X is a vehicle to everything (vehicle to everything, V2X) communication technology developed based on a cellular system. C-V2X utilizes and enhances current cellular network functions and elements to implement low-latency and highly reliable communication between various nodes in a vehicle network. For example, as shown in FIG. 1, C-V2X implements communication between vehicles (vehicle to vehicle, V2V), communication between vehicles and pedestrians (vehicle to pedestrian, V2P), communication between vehicles and infrastructure (vehicle to infrastructure, V2I), and communication between vehicles and a network (vehicle to network, V2N).

As cellular systems evolve from the 4th generation (4G) Long Term Evolution (LTE) system to the 5th generation (5G) New Radio (NR) system, C-V2X also evolves from LTE-V2X to NR-V2X.

NR V2X can support lower transmission latency, more reliable communication transmission, higher throughput, and better user experience, meeting the needs of a wider range of application scenarios. Furthermore, the vehicle-to-vehicle communication technology supported by V2X can be extended to device-to-device (D2D) communication between devices under any system.

For future vehicle connectivity services, these may be implemented through the air interface (Uu interface), for example, services with high requirements for rate, latency, and reliability, such as vehicle networking services and in-vehicle entertainment services, can be realized through the Uu interface. Additionally, vehicles within the same area may have consistent service requirements, so the base station can serve multiple vehicles simultaneously using a multicast method, thereby improving resource utilization efficiency. For example, as shown in Figure 2, the base station can provide services for multiple vehicle groups, where the same service data is transmitted to all vehicles within the same group.

Generally, vehicles can obtain perception information. Currently, the perception information on the vehicle side mainly comes from external vehicle-mounted radars, whose frequencies are mainly divided into the 24 gigahertz (GHz) frequency band and the 77 GHz frequency band. Strictly speaking, 77 GHz radar belongs to millimeter-wave radar, but in practice, 24 GHz radar is also referred to as millimeter-wave radar. Among these, 77 GHz millimeter-wave radar is mainly deployed at the front of the vehicle for detecting objects at medium to long distances, while 24 GHz millimeter-wave radar is generally deployed on the sides and rear of the vehicle for blind spot detection, parking assistance systems, and the like.

Millimeter-wave radar is a radar sensor that measures distance, relative distance, direction, and the like using electromagnetic waves in the millimeter wave band. It can emit electromagnetic waves in the millimeter wave band forward, and if there are vehicles or objects ahead, it can receive echoes formed by reflection. By analyzing the detected changes in echo frequency, the radar can detect whether there are vehicles or objects ahead, and determine the distance, relative speed, and direction between the vehicle and the object ahead.

For example, a millimeter-wave radar performs measurement by transmitting an electromagnetic wave in a millimeter-wave frequency band and receiving an echo formed through reflection, and determines position data and a relative distance of a target based on a time difference between transmission and reception. Based on a propagation speed of the electromagnetic wave, a distance *s* to the target may be expressed as *s* = *ct*/2, where t represents the time difference between transmission and reception, namely, a time from transmission of the electromagnetic wave by the radar to reception of the echo, and *c* represents the speed of light.

### 2. Integration of Sensing and Communication:

Future service demands and technological development trends have given rise to the integration of sensing and communication. For example, sensing, also known as wireless sensing, refers to the process of emitting electromagnetic energy into space and calculating information about an object by receiving the radio waves reflected from the object present in the space. This information can include parameters such as the object's position, direction, height, speed, size, and motion path, and can also detect the internal and external shape and structure of the object. By exploring the transmission, echo, reflection, and scattering of radio waves, the physical world can be sensed and better understood. As one of the electromagnetic wave sensing technologies, wireless sensing technology, due to its penetration and security, can serve as an important alternative technology for applications such as security checks, detection of hidden objects, and environmental reconstruction.

With the integration of sensing and communication, the ability to simultaneously perform both communication and sensing functions will become a capability trend for future base stations and terminals. For example, future base stations will have the capability to monitor the status of targets (such as low-altitude flying objects, traffic flow, and crowd movements at hotspots) within their coverage area, enabling the detection, localization, and identification of these targets. In addition, they will also have the ability to perform real-time measurements of the natural environmental conditions, weather, and other factors within their coverage area.

In the future, terminals will be upgraded to intelligent agents, with the capabilities of autonomous vehicles, drones, robots, and other intelligent devices continuously improving. Intelligent agents may need to recognize human posture, actions, and expressions to enhance human-machine interaction, and also need to identify the action states between multiple intelligent agents to improve intelligent collaboration. Furthermore, intelligent agents may need to recognize the internal attributes of the human body, products, and items to provide remote, AI-based unmanned health check-ups, quality inspections, and security checks. These services will further drive the integration of sensing and communication in intelligent agents, not only enhancing the information interaction capabilities between intelligent agents and between intelligent agents and systems, but also potentially reducing the size, power consumption, and cost of intelligent agent hardware, thereby promoting the universal adoption of new services.

In future-oriented sixth generation (6th generation, 6G) wireless networks, communication capabilities and sensing capabilities will be integrated and coexist, evolving into an "integrated communication and sensing" (ICS) technology direction. This will endow 6G networks with the ability to sense the physical world at all times and in all places, fully meeting the interconnection of multi-dimensional sensory experiences while effectively supporting the wide-area expansion of communication capabilities, thereby opening up application spaces that surpass the connectivity of traditional mobile communication networks.

For example, integrated sensing and communication (ISAC) is a typical architecture for the integration of sensing and communication. ISAC shares software and hardware resources within the same system to provide both high-quality communication and high-precision sensing functions, thereby reducing costs and improving system performance. Here, the communication function can be understood as traditional data transmission, while the sensing function includes functions such as ranging, speed measurement, angle measurement, imaging, and detection.

### 3. Uplink Power Control:

When the electromagnetic wave signal transmitted by the transmitter propagates through a wireless channel, the signal strength will decrease upon reaching the receiver due to the effects of path loss and shadow fading. Therefore, when the distance between the transmitter and receiver changes, the transmitting system appropriately adjusts the signal transmission power to compensate for the impact of path loss and shadow fading. It should be noted that the transmission power mentioned in this application may also be referred to as the transmit power, and the two terms can be used interchangeably.

Among them, the transmit power of the physical uplink shared channel (physical uplink shared channel, PUSCH) on the terminal side satisfies the following relationship: ${P}_{PUSCH} \left(i\right) = min \left\{\begin{matrix}{P}_{CMAX} \\ {P}_{{O}_{PUSCH}} + 10 {log}_{10} \left({2}^{μ}⋅{M}_{RB}^{PUSCH}\left(i\right)\right) + α ⋅ PL + {Δ}_{TF} + f\end{matrix}\right\} dBm$ (1)
where *P_{PUSCH}*(*i*) represents the PUSCH transmit power on the *i*-th time unit. For example, a time unit in this application may be an orthogonal frequency division multiplexing (OFDM) symbol, a slot, a mini-slot, a subframe, or the like.

*P_{CMAX}* represents the maximum transmit power of the terminal. *P_{O\PUSCH}* represents expected received power on a single resource block (RB) at the base station.

*µ* represents a subcarrier configuration factor used to indicate a subcarrier size. ${M}_{RB}^{PUSCH} \left(i\right)$ represents a quantity of RBs occupied by the PUSCH on the *i*-th time unit. Δ*_{TF}* represents a power offset determined based on a modulation and coding scheme (MCS). min {} represents a minimum-value operation.

*α* represents a path loss compensation factor. *PL* represents a path loss estimate, for example, *PL =* reference signal transmit power - measured reference signal received power (reference signal received power, RSRP). The reference signal may be sent by the base station and received by the terminal; or may be sent by the terminal and received by the base station, in which case the base station needs to send the measured RSRP to the terminal.

*f* represents a closed-loop power control parameter, and may be understood as an adjustment amount of the PUSCH transmit power. *f* may be determined based on transmit power control (TPC) delivered by the base station.

For example, the base station may determine the TPC of the terminal based on the power control configuration parameters, information fed back by the terminal, and measurement information from the base station, and then deliver the TPC through downlink control information (DCI) in the physical downlink control channel (PDCCH).

PUSCH power control may be understood as a process in which the base station adjusts PUSCH transmit power by adjusting TPC. For example, during initial access or handover access to a target cell, the terminal uses open-loop power control (*P_{OPUSCH} + α · PL*) and determines initial transmit power based on power parameters configured by the base station and a path loss.

During the service continuity process, the terminal employs a combination of open-loop power control and closed-loop power control. Specifically, the terminal not only determines the transmission power based on the power parameters configured by the base station and the path loss but also adaptively adjusts the PUSCH transmission power according to the TPC command from the base station, in order to adapt to changes in the PUSCH channel environment and service load.

### 4. Sidelink (SL) Power Control:

In sidelink power control, both downlink path loss and sidelink path loss are considered simultaneously. For example, the transmit power of the Physical Sidelink Shared Channel (PSSCH) satisfies the following relationship: ${P}_{PSSCH} \left(i\right) = min \left({P}_{CMAX},{P}_{MAX , CBR},min\left({P}_{PSSCH , D}\left(i\right),{P}_{PSSCH , SL}\left(i\right)\right)\right) dBm$ (2)
where P_PSSCH(i) represents PSSCH transmit power on the i-th time unit, *P*_{CMAX} represents the maximum transmit power of the terminal, *P*_{MAX*,CBR*} represents power determined based on a data priority and a channel busy ratio (CBR), and *P*_{PSSCH,*D*}(*i*) and *P*_{PSSCH,*SL*}(*i*) respectively represent power determined based on a downlink path loss and power determined based on a sidelink path loss, and respectively satisfy the following relationships: ${P}_{PSSCH , D} \left(i\right) = {P}_{0 , D} + 10 {log}_{10} \left({2}^{μ}⋅{M}_{RB}^{PSSCH}\left(i\right)\right) + {α}_{D} ⋅ {PL}_{D}$ (3) ${P}_{PSSCH , SL} \left(i\right) = {P}_{0 , SL} + 10 {log}_{10} \left({2}^{μ}⋅{M}_{RB}^{PSSCH}\left(i\right)\right) + {α}_{SL} ⋅ {PL}_{SL}$ (4)
where *P*_{O,*D*} represents an expected received power level on a single RB at the base station, *µ* represents a subcarrier configuration factor, ${M}_{RB}^{PSSCH} \left(i\right)$ represents a quantity of RBs occupied by the PSSCH on the i-th time unit, *α_{D}* represents a downlink path loss compensation factor, and *PL_{D}* represents a downlink path loss estimate, for example, *PL_{D}* = reference signal transmit power - measured RSRP. The reference signal may be sent by the base station to the terminal, or may be sent by the terminal to the base station.
where P_O,SL represents an expected received power level on a single RB at the transmitting end, α _SL represents a sidelink path loss compensation factor, and PL_SL represents a sidelink path loss estimate, for example, *PL_{SL}* = reference signal transmit power - measured RSRP. The reference signal may be sent by the terminal to another terminal, or may be sent by another terminal to the terminal.

In addition, on the sidelink, the PSSCH may be transmitted at the same time unit as the physical sidelink control channel (PSCCH). In this scenario, the transmit power of the PSSCH and the PSCCH satisfies the following relationship: ${P}_{PSSCH 2} \left(i\right) = 10 {log}_{10} \left(\frac{{M}_{RB}^{PSSCH} \left(i\right) - {M}_{RB}^{PSCCH} \left(i\right)}{{M}_{RB}^{PSSCH} \left(i\right)}\right) + {P}_{PSSCH} \left(i\right) dBm$ (5) ${P}_{PSCCH} \left(i\right) = 10 {log}_{10} \left(\frac{{M}_{RB}^{PSCCH} \left(i\right)}{{M}_{RB}^{PSSCH} \left(i\right)}\right) + {P}_{PSSCH} \left(i\right) dBm$ (6)
where ${M}_{RB}^{PSCCH} \left(i\right)$ represents a quantity of RBs occupied by the PSCCH on the *i*-th time unit. *P_{PSSCH}*(*i*) is implemented as shown in relationship (2), and details are not described again.

### 5. SL congestion control:

In distributed systems, there is no central node (such as a base station), and the number of terminals and the resources each terminal uses cannot be uniformly controlled. Therefore, congestion control is necessary to ensure system performance. In the congestion control mechanism of SL (Synchronous Link), terminals measure the CBR (Channel Binding Ratio) and the channel occupancy ratio (CR), and adjust the CR based on the CBR threshold to limit the resource usage by terminals, thereby preventing system congestion.

Herein, CR is a ratio of a sum of a quantity of subchannels already used for transmission and a quantity of subchannels to be used for transmission by the terminal within a CR window to a total quantity of subchannels in the CR window, and indicates a channel occupancy degree of the transmitting terminal within the CR window. For example, when the CR window is time slots [*n* - *a, n* + *b*], CR is a ratio of a sum of a quantity of subchannels already used for transmission by the terminal within window [*n* - *a, n* - 1] and a quantity of subchannels to be used for transmission within window [*n, n + b*] to a total quantity of subchannels within CR window [*n* - *a, n* + *b*]*. n, a*, and *b* are positive integers.

CBR indicates a busy degree of a channel over a period of time, and may be a ratio of a quantity of subchannels, within window [*n* - *a, n* - 1], for which a measured received signal strength indication (RSSI) is greater than an RSSI threshold to a total quantity of measured subchannels.

Specifically, in the SL congestion control mechanism, a terminal can perform SL transmission if the following constraints are met; otherwise, the terminal cannot perform SL transmission. ${\sum }_{i \geq k} CR \left(i\right) \leq {CR}_{Limit} \left(k\right)$ (7)
where *CR*(*i*) represents CR of PSSCH transmission having priority *i* in slot *n* - *N, N* represents a congestion control processing time, and CRLimit represents a CR constraint related to priority *k* and CBR of slot *n* - *N. CR_{Limit}*(*k*) may be configured by higher-layer signaling.

As mentioned above, currently, only the power control method for communication signals is defined. For terminals that have both communication and sensing functions, they may need to simultaneously transmit sensing signals and communication signals. In this scenario, how to determine the transmit power of the sensing signal is an urgent issue that needs to be addressed at present. Based on this, this application provides a power control method that can determine the transmit power of the sensing signal, while also meeting the constraint of the terminal's maximum transmit power. This method dynamically and flexibly adjusts the transmit power of communication signals and sensing signals to meet transmission requirements and improve transmission performance.

The technical solutions in the embodiments of this application may be used in various communications systems, where the communications system may be a 3rd Generation Partnership Project (3GPP) communications system, for example, a 4th generation (4th generation, 4G) system such as a long term evolution (long term evolution, LTE) system, a 5G system such as a new radio (new radio, NR) system, a system for hybrid networking of LTE and 5G, a non-terrestrial network (non-terrestrial network, NTN), or another next-generation communications system, such as a 6G communications system. Alternatively, the communications system may be a non-3GPP communications system. This is not limited.

The technical solutions in the embodiments of this application may be used in various scenarios, for example, may be applied to a scenario in which a terminal communicates with a network, or may be applied to a scenario in which a terminal performs direct communication with another terminal, such as device-to-device (device-to-device, D2D), machine-to-machine (machine to machine, M2M), or V2X.

The foregoing communication system and scenario to which this application is applicable are merely examples for illustration. The communication system and scenario to which this application is applicable are not limited thereto. The communication system and scenario provided in this application do not impose any limitation on the solutions in this application. This is described herein in a unified manner, and details are not described in the following again.

A possible and non-limitative system to which this application is applicable may include a first communications apparatus and a second communications apparatus. The first communications apparatus and the second communications apparatus may communicate with each other in a wireless manner.

As a possible implementation, as shown in FIG. 3, the first communications apparatus 310 may be a terminal or a module (for example, a chip, a chip system, or a processor) in a terminal, and the second communications apparatus 320 may be a radio access network (radio access network, RAN) node or a module (for example, a chip, a chip system, or a processor) in a RAN node. In this case, the first communications apparatus and the second communications apparatus may transmit a communication signal through an uplink or a downlink or a Uu interface.

In another possible implementation, both the first communications apparatus and the second communications apparatus may be terminals, or both may be modules (such as a chip, a chip system, or a processor) in a terminal. In this case, the first communications apparatus and the second communications apparatus may transmit a communication signal by using a sidelink or a PC5 interface.

For example, the first communications apparatus and the second communications apparatus may be two terminals in a direct communication scenario between any terminals, including but not limited to D2D, M2M, V2X, Internet of Things (internet of things, IoT), relay (relay) between terminals, cooperation (cooperation) between terminals, and the like.

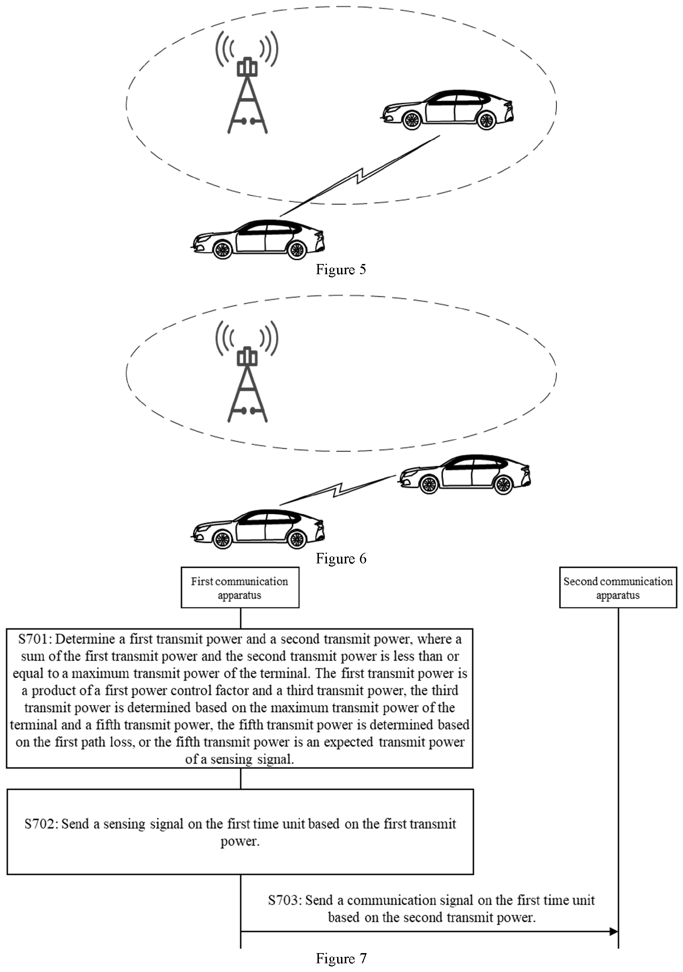

For example, as shown in FIG. 4, both the first communications apparatus and the second communications apparatus may be within a coverage area of a RAN node. Alternatively, as shown in FIG. 5, one of the first communications apparatus and the second communications apparatus may be within a coverage area of a RAN node, and the other may be outside the coverage area of the RAN node. Alternatively, as shown in FIG. 6, both the first communications apparatus and the second communications apparatus are outside a coverage area of a RAN node.

The RAN node may be an apparatus deployed in a RAN of a 3GPP-related cellular system. For example, the RAN may be a 4G, 5G mobile communication system, or a future-oriented evolved system (e.g., a 6G mobile communication system). Alternatively, the RAN may be an open access network (open RAN, O-RAN, or ORAN), a cloud radio access network (cloud radio access network, CRAN), or a wireless fidelity (wireless fidelity, WiFi) system. Alternatively, the RAN may be a communication system that integrates two or more of the above systems.

A RAN node, sometimes also referred to as an access network device, RAN entity, or access node, constitutes a part of a communication system designed to assist terminals in achieving wireless access. RAN nodes and terminals are sometimes collectively referred to as communication devices. For instance, network element 310 in Figure 3 may be understood as a communication device with base station functionality, while network element 320 may be understood as a communication device with terminal functionality.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communications system, a base station in a future mobile communications system, an access node in a WiFi system, or the like. The RAN node may be a macro base station, a micro base station, an indoor station, a relay node, a donor node, or a radio controller in a CRAN scenario. Optionally, the RAN node may alternatively be a server, a wearable device, a vehicle, an in-vehicle device, or the like. For example, the access network device in the V2X technology may be a road side unit (road side unit, RSU). All or a part of functions of the RAN node in this application may be implemented by software running on hardware, or by virtualization functions instantiated on a platform (for example, a cloud platform). The RAN node in this application may alternatively be a logical node, a logical module, or software that can implement all or a part of functions of the RAN node.

In another possible scenario, multiple RAN nodes collaborate to assist a terminal in achieving wireless access, where different RAN nodes respectively implement some functions of a base station. For example, the RAN node may be a central unit (CU), a distributed unit (DU), a CU-control plane (control plane, CP), a CU-user plane (user plane, UP), a radio unit (RU), or the like. The CU and DU may be separately disposed, or may also be included in the same network element, for example, in a baseband unit (BBU). The RU may be included in a radio frequency device or a radio frequency unit, for example, included in a remote radio unit (RRU), an active antenna unit (AAU), or a remote radio head (RRH).

In different systems, the CU (or CU-CP and CU-UP), DU, or RU may also have different names, but a person skilled in the art can understand their meanings. For example, in an ORAN system, the CU may also be referred to as an O-CU (Open CU), the DU may also be referred to as an O-DU, the CU-CP may also be referred to as an O-CU-CP, the CU-UP may also be referred to as an O-CU-UP, and the RU may also be referred to as an O-RU. For ease of description, this application uses CU, CU-CP, CU-UP, DU, and RU as examples for description. Any one of the units of the CU (or CU-CP, CU-UP), DU, and RU in this application may be implemented by a software module, a hardware module, or a combination of a software module and a hardware module.

A terminal may also be referred to as a terminal device, user equipment (user equipment, UE), a mobile station, a mobile terminal, or the like. The terminal may be widely used in various scenarios, such as device-to-device (device-to-device, D2D) communication, vehicle to everything (vehicle to everything, V2X) communication, machine type communication (machine-type communication, MTC), the Internet of Things (internet of things, IOT), virtual reality, augmented reality, industrial control, self-driving, telemedicine, smart grid, smart home appliances, smart office, smart wearable, smart transportation, smart city, and the like. The terminal may be a mobile phone, a tablet computer, a computer with a wireless transceiver function, a wearable device, a vehicle, an unmanned aerial vehicle (UAV), a helicopter, an airplane, a ship, a robot, a robotic arm, a smart home device, or the like. An embodiment of this application does not limit the device form of the terminal.

It should be noted that the communication system described in the embodiments of this application is intended to describe the technical solutions in the embodiments of this application more clearly, and does not constitute a limitation on the technical solutions provided in the embodiments of this application. A person of ordinary skill in the art may learn that, with evolution of network architectures and emergence of new service scenarios, the technical solutions provided in the embodiments of this application are also applicable to similar technical problems.

With reference to the communications systems shown in FIG. 3 to FIG. 6, the following describes the power control method provided in the embodiments of this application by using an example in which a terminal and a RAN node interact with each other or a terminal and a terminal interact with each other. It should be noted that, in the following embodiments of this application, names of messages between the terminal and the RAN node, names of parameters, or names of information between the terminal and the terminal are merely examples, and may be other names in other embodiments. This is not specifically limited in the method provided in this application.

It may be understood that, in the embodiments of this application, the terminal or the RAN node may perform some or all of the steps in the embodiments of this application. These steps or operations are merely examples, and the embodiments of this application may further perform other operations or variations of various operations. In addition, the steps may be performed in different orders than those presented in the embodiments of this application, and it is possible that not all operations in the embodiments of this application need to be performed.

It may be understood that, in this application, an example in which a RAN node and a terminal or a terminal and a terminal are used as an execution entity of the interaction indication is used for illustration, but the execution entity of the interaction indication is not limited in this application. For example, the method performed by the RAN node in this application may also be performed by a module (for example, a chip, a chip system, or a processor) applied to the RAN node, or may be implemented by a logical node, a logical module, or software that can implement all or some functions of the RAN node. The method performed by the terminal in this application may also be performed by a module (for example, a chip, a chip system, or a processor) applied to the terminal, or may be implemented by a logical node, a logical module, or software that can implement all or some functions of the terminal.

Referring to FIG. 7, it is a flowchart of a power control method according to an embodiment of this application. The power control method may include the following steps:
S701: A first communications apparatus determines a first transmit power and a second transmit power.

The sum of the first transmit power and the second transmit power is less than or equal to the maximum transmit power of the terminal. The first transmit power may be understood as a transmit power of a sensing signal, and the second transmit power may be understood as a transmit power of a communication signal. It may be understood that the first communications apparatus is a terminal or a module (such as a chip, a chip system, or a processor) in the terminal. The maximum transmit power of the terminal is the maximum transmit power of the first communications apparatus.

The first transmit power is a product of the first power control factor and the third transmit power. The second transmit power is a product of the second power control factor and the fourth transmit power. For example, the first power control factor is used to adjust the transmit power of the sensing signal, and the second power control factor is used to adjust the transmit power of the communication signal. A value range of the first power control factor may be [0, 1], and a value range of the second power control factor may also be [0, 1]. An initial value of the first power control factor may be 1, or may be another value, which is not specifically limited in this application.

It should be noted that the power control factor in this application may also be referred to as a power adjustment factor, or may have another name. A name of the power control factor is not specifically limited in this application.

For example, the sensing signal may be understood as a signal used for sensing, and the sensing signal may also have another name, which is not limited. The sensing signal may be an OFDM signal obtained after a specific sequence is modulated on a subcarrier. The specific sequence may be a ZC sequence, a Gold sequence, or the like, or the specific sequence may be a random data symbol, for example, a random data symbol modulated by using a method such as quadrature phase shift keying (quadrature phase shift keying, QPSK) or 16 quadrature amplitude modulation (quadrature amplitude modulation, QAM). This is not specifically limited in this application.

For example, the first communications apparatus may first determine the third transmit power and the first power control factor, and then determine a product of the first power control factor and the third transmit power as the first transmit power. In addition, the first communications apparatus may first determine the fourth transmit power and the second power control factor, and then determine a product of the second power control factor and the fourth transmit power as the second transmit power. That is, the first transmit power may be understood as a final transmit power of the sensing signal, or a transmit power of an adjusted sensing signal, and the third transmit power may be understood as an initial transmit power of the sensing signal. The second transmit power may be understood as a final transmit power of the communication signal, or a transmit power of an adjusted communication signal, and the fourth transmit power may be understood as an initial transmit power of the communication signal.

This embodiment does not specifically limit an order in which the third transmit power and the fourth transmit power are determined. The first communications apparatus may first determine the third transmit power, and then determine the fourth transmit power; or first determine the fourth transmit power, and then determine the third transmit power; or determine the third transmit power and the fourth transmit power at the same time.

The third transmit power is determined based on the maximum transmit power of the terminal and the fifth transmit power. A specific manner of determining the third transmit power will be described in subsequent embodiments, and details are not described herein again.

In a possible implementation, the fifth transmit power is determined based on the first path loss. For example, the first path loss may be a sensing path loss, or a path loss of a sensed signal or a sensed link. That is, the fifth transmit power may be understood as a transmit power that considers the sensing path loss. A specific manner of determining the fifth transmit power will be described in subsequent embodiments, and details are not described herein again.

In another possible implementation, the fifth transmit power is an expected transmit power of the sensing signal, or in other words, the fifth transmit power is an expected transmit power of the sensing signal (by the sensing signal transmit end or the sensing signal receive end), or in other words, the fifth transmit power is a transmit power requirement of the sensing signal. In this possible implementation, the fifth transmit power may be configured at a higher layer.

The fourth transmit power is determined based on the maximum transmit power of the terminal and the second path loss. For example, the second path loss may be a communication path loss.

S702: The first communications apparatus sends a sensing signal on the first time unit based on the first transmit power.

The first time unit may be understood as a time unit in which the sensing signal is located, or a time unit used to carry the sensing signal. The first time unit may be scheduled by the RAN node for the first communications apparatus, or may be determined by the first communications apparatus itself. For example, in an SL system, the first communications apparatus selects the first time unit from a resource pool or determines the first time unit based on an SL congestion control mechanism. The time unit may be, for example, an OFDM symbol, a slot, a mini-slot, a subframe, or the like, which is not limited.

In other words, the first communications apparatus functions as a transmit end of the sensing signal. The receive end of the echo signal corresponding to the sensing signal may be the first communications apparatus itself, or may be a third communications apparatus. The third communications apparatus may be, for example, the second communications apparatus or another communications apparatus other than the second communications apparatus. This is not specifically limited in this application. For example, the echo signal may be understood as a signal formed after the sensing signal is reflected by an object.

For example, after receiving the echo signal, the receive end of the echo signal may perform sensing processing based on the echo signal, for example, sample the echo signal to obtain a received sequence, and perform correlation processing on the received sequence and a local sequence (a sequence used to generate a sensing signal), to obtain sensing information, for example, obtain a location, a speed, a distance, or the like of a sensing target.

S703: The first communications apparatus sends a communication signal on the first time unit based on the second transmit power. Correspondingly, the second communications apparatus receives the communication signal on the first time unit. That is, the first communications apparatus further functions as a transmit end of the communication signal, and the second communications apparatus functions as a receive end of the communication signal.

When the first communications apparatus is a terminal and the second communications apparatus is a RAN node, the communication signal is a signal carried on an uplink reference signal and/or an uplink channel. The uplink channel may be, for example, a physical random access channel (physical random access channel, PRACH), a physical uplink control channel (physical uplink control channel, PUCCH), or a PUSCH. The uplink reference signal may include but is not limited to a sounding reference signal (sounding reference signal, SRS).

When both the first communications apparatus and the second communications apparatus are terminals, the communication signal is a signal carried on the PSSCH.

It may be understood that, because both the sensing signal and the communication signal are sent by the first communications apparatus in the first time unit, it may be considered that the first communications apparatus sends the sensing signal and the communication signal at the same time.

Based on this solution, the first communications apparatus may determine the transmit power of the sensing signal, thereby implementing the sending of the sensing signal. In addition, the first communications apparatus uses the product of the first power control factor and the third transmit power as the transmit power (that is, the first transmit power) of the sensing signal, and uses the product of the second power control factor and the fourth transmit power as the transmit power (that is, the second transmit power) of the communication signal, so that the transmit power of the sensing signal and the communication signal may be dynamically and flexibly adjusted by using the first power control factor and the second power control factor, thereby ensuring that a sum of the first transmit power and the second transmit power meets a maximum transmit power constraint of the terminal, thereby implementing simultaneous sending of the sensing signal and the communication signal, and meeting a requirement for simultaneous sensing and communication.

The overall procedure of the power control method provided in this application has been described above. The following provides a detailed description of the manner of determining the third transmit power in the foregoing solution. For example, the third transmit power may be determined in the following two manners:
Manner 1: The third transmit power is determined based on the maximum transmit power of the terminal and the fifth transmit power. The third transmit power satisfies the following relationship: ${P}_{sense} \left(i\right) = min \left({P}_{CMAX}, {P}_{sense , PL}\left(i\right)\right)$ (8)
where *Pₛₑₙₛₑ*(*i*) represents the third transmit power. *i* represents an index of the first time unit. *P_{CMAX}* represents the maximum transmit power of the terminal. *P_{sense,PL}*(*i*) represents the fifth transmit power. min() represents a minimum-value operation.

In a possible implementation, when the first communications apparatus is a terminal and the second communications apparatus is a RAN node, or when the first communications apparatus belongs to an uplink communication and sensing integrated system, the first communications apparatus determines the third transmit power in the manner 1.

In a possible implementation, when the fifth transmit power is determined based on the first path loss, the fifth transmit power may be determined based on the first path loss and at least one of the following: first expected receive power on a single RB, first path loss compensation factor, a quantity of RBs occupied by the sensing signal, a first subcarrier configuration factor, or a first closed-loop power control parameter.

In a possible implementation, the first path loss may be expressed as: transmit power of the reference signal/sequence minus the received power of the reference signal/sequence that is obtained through measurement. The transmitter of the reference signal/sequence may be the first communications apparatus, and the receiver may be the third communications apparatus. In this case, the third communications apparatus further feeds back the received power of the reference signal/sequence to the first communications apparatus. Alternatively, the transmitter of the reference signal/sequence may be the third communications apparatus, and the receiver may be the first communications apparatus. Alternatively, both the transmitter and the receiver of the reference signal/sequence may be the first communications apparatus. In this case, the reference signal is used as the sensing signal, the reference sequence is a sequence used to generate the sensing signal, and the reference signal received by the first communications apparatus may be understood as an echo signal of the reference signal sent by the first communications apparatus.

In a possible implementation, the first expected received power on a single RB may be a receive power level on a single RB expected by the RAN node. For example, the RAN node (namely, the second communications apparatus) may indicate the first expected received power to the terminal (namely, the first communications apparatus).

In a possible implementation, the quantity of RBs occupied by the sensing signal is a quantity of RBs occupied by the sensing signal in the first time unit. The first subcarrier configuration factor is used to indicate a subcarrier size corresponding to the sensing signal.

In a possible implementation, the first closed-loop power control parameter may be indicated by the RAN node to the terminal. For example, the terminal may first report a power headroom to the RAN node, and the RAN node may determine the first closed-loop power control parameter based on the power headroom, and indicate the first closed-loop power control parameter to the terminal.

For example, the fifth transmit power may meet the following relationship: ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense} + {f}_{sense}$ (9)
where *P*_{*sense*,*PL*}(*i*) represents the fifth transmit power, *i* represents an index of the first time unit, *P*_{0,*sense*} represents first expected received power on a single RB, *µ*1 represents a first subcarrier configuration factor, ${M}_{RB}^{sense} \left(i\right)$ represents a quantity of RBs occupied by the sensing signal in time unit *i* (that is, the first time unit), *αₛₑₙₛₑ* represents a first path loss compensation factor, *PL*_{*s*ense} represents a first path loss or an estimate of the first path loss, and *fₛₑₙₛₑ* represents a first closed-loop power control parameter.

In a possible implementation, in this manner, the fourth transmit power is determined based on the maximum transmit power of the terminal, the second path loss, and at least one of the following: second expected received power on a single RB, a second path loss compensation factor, a quantity of RBs occupied by the communication signal, a second subcarrier configuration factor, a second closed-loop power control parameter, or a power offset value. The power offset value is determined by an MCS of the communication signal.

When the first communications apparatus is a terminal and the second communications apparatus is a RAN node, the second path loss may be an uplink or downlink path loss, or a path loss between the terminal and the RAN node. For example, the second path loss may be *PL* in relationship (1), and the fourth transmit power may be determined based on relationship (1).

The second expected received power on a single RB, the second path loss compensation factor, the quantity of RBs occupied by the communication signal, the second subcarrier configuration factor, the second closed-loop power control parameter, and the power offset may respectively be *P_{OPUSCH}, α,* ${M}_{RB}^{PUSCH} \left(i\right)$, *µ*, *f*, and Δ*_{TF}* in relationship (1). Reference may be made to the foregoing related descriptions, and details are not described again.

Manner 2: The third transmit power is determined based on the maximum transmit power of the terminal, the fifth transmit power, and the sixth transmit power. The third transmit power satisfies the following relationship: ${P}_{sense} \left(i\right) = min \left({P}_{CMAX},{P}_{sense , C},{P}_{sense , PL}\left(i\right)\right)$ (1)
where *Pₛₑₙₛₑ*(*i*) represents the third transmit power, *i* represents an index of the first time unit, *P_{CMAX}* represents the maximum transmit power of the terminal, *P*_{*sense*,*PL*}(*i*) represents the fifth transmit power, *P*_{*sense*,*C*} represents the sixth transmit power, and min () represents a minimum-value operation.

In a possible implementation, when both the first communications apparatus and the second communications apparatus are terminals, or when the first communications apparatus belongs to a sidelink/D2D communication and sensing integrated system, the first communications apparatus determines the third transmit power in the second manner.

In a possible implementation, when the fifth transmit power is determined based on the first path loss, the fifth transmit power may be determined based on the first path loss and at least one of the following: first expected received power on a single RB, first path loss compensation factor, a quantity of RBs occupied by the sensing signal, or a first subcarrier configuration factor.

The first expected received power on the single RB may be a receive power level on the single RB expected by the first communications apparatus or the second communications apparatus. For the first path loss, the first path loss compensation factor, the quantity of RBs occupied by the sensing signal, and the first subcarrier configuration factor, refer to the related descriptions in the foregoing manner 1. Details are not described herein again.

For example, the fifth transmit power may satisfy the following relationship: ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense}$ (11)
where *P*_{*sense*,*PL*}(*i*) represents the fifth transmit power, *i* represents an index of the first time unit, *P*_{0,*sense*} represents first expected received power on a single RB, *µ*1 represents a first subcarrier configuration factor, ${M}_{RB}^{sense} \left(i\right)$ represents a quantity of RBs occupied by the sensing signal in time unit *i* (that is, the first time unit), *αₛₑₙₛₑ* represents a first path loss compensation factor, and *PLₛₑₙₛₑ* represents a first path loss or an estimate of the first path loss.

In a possible implementation, the sixth transmit power is determined based on at least one of CBR, CR, or a sensing priority. For example, CR may be CR corresponding to time units [*i - a, i* + *b*], namely, a CR window is time units [*i - a, i + b*]*,* and *i* represents an index of the first time unit. CBR may be CBR corresponding to time units [*i - a, i -* 1]. *a* and *b* are positive integers. For calculation of CR and CBR, reference may be made to the foregoing descriptions of the SL congestion control mechanism, and details are not described again.

As a possible implementation, the CBR and/or the CR are inversely proportional to the sixth transmit power. For example, the larger the CBR and/or the CR, the smaller the sixth transmit power; or the smaller the CBR and/or the CR, the larger the sixth transmit power. The sensing priority is directly proportional to the sixth transmit power. For example, the higher the sensing priority, the larger the sixth transmit power; or the lower the sensing priority, the smaller the sixth transmit power.

For example, the larger the CBR and/or the CR, the busier the channel is, and in this case, the smaller the sixth transmit power, which means that the candidate transmit power determined based on the CBR and/or the CR is smaller when the channel is busy. When the candidate transmit power is relatively small, the interference of the sensing signal sent by the first communication device to other signals in the channel can be reduced.

In addition, the higher the sensing priority, the more important the sensing service is, and in this case, the larger the sixth transmit power, which means that the more important the sensing service is, the larger the candidate transmit power determined based on the sensing priority. When the candidate transmit power is relatively large, the performance of the sensing service can be ensured, that is, the performance of the high-priority service can be ensured.

As an example, the sixth transmit power is equal to a product of a third power control factor and the fifth transmit power. A value range of the third power control factor is [0,1]. The third power control factor is determined based on at least one of CBR, CR, or a sensing priority. In addition, CBR and/or CR is inversely proportional to the third power control factor, and the sensing priority is directly proportional to the third power control factor.

For example, the correspondence between the CBR, the CR, or the perceived priority and the third power control factor may be shown by at least one row in the following Table 1 to Table 7. A larger priority number indicates a lower priority. Optionally, the correspondence may also be a combination of correspondences reflected in different tables.

**Table 1**

| CR | Third power control factor |
|---|---|
| <0.8 | 0.1 |
| <0.6 | 0.2 |
| <0.5 | 0.3 |
| <0.4 | 0.5 |
| <0.3 | 0.7 |
| <0.2 | 0.9 |
| <0.1 | 1 |

**Table 2**

| CBR | 3rd power control factor |
|---|---|
| <0.8 | 0.1 |
| <0.6 | 0.2 |
| <0.5 | 0.3 |
| <0.4 | 0.5 |
| <0.3 | 0.7 |
| <0.2 | 0.9 |
| <0.1 | 1 |

**Table 3**

| Perceived Priority | Third Power Control Factor |
|---|---|
| 7 | 0.1 |
| 6 | 0.2 |
| 5 | 0.3 |
| 4 | 0.5 |
| 3 | 0.7 |
| 2 | 0.9 |
| 1 | 1 |

**Table 4**

| CR | CBR | 3rd power control factor |
|---|---|---|
| <0.8 | <0.8 | 0.1 |
| <0.6 | <0.6 | 0.2 |
| <0.5 | <0.5 | 0.3 |
| <0.4 | <0.4 | 0.5 |
| <0.3 | <0.3 | 0.7 |
| <0.2 | <0.2 | 0.9 |
| <0.1 | <0.1 | 1 |

**Table 5**

| CR | Perceived Priority | 3rd power control factor |
|---|---|---|
| < 0.8 | 7 | 0.1 |
| <0.6 | 6 | 0.2 |
| <0.5 | 5 | 0.3 |
| <0.4 | 4 | 0.5 |
| <0.3 | 3 | 0.7 |
| <0.2 | 2 | 0.9 |
| <0.1 | 1 | 1 |

**Table 6**

| CBR | Perceived Priority | 3rd power control factor |
|---|---|---|
| < 0.8 | 7 | 0.1 |
| <0.6 | 6 | 0.2 |
| <0.5 | 5 | 0.3 |
| <0.4 | 4 | 0.5 |
| <0.3 | 3 | 0.7 |
| <0.2 | 2 | 0.9 |
| <0.1 | 1 | 1 |

**Table 7**

| CR | CBR | Perceived priority | Third power control factor |
|---|---|---|---|
| < 0.8 | < 0.8 | 7 | 0.1 |
| <0.6 | <0.6 | 6 | 0.2 |
| <0.5 | <0.5 | 5 | 0.3 |
| <0.4 | <0.4 | 4 | 0.5 |
| <0.3 | <0.3 | 3 | 0.7 |
| <0.2 | <0.2 | 2 | 0.9 |
| <0.1 | <0.1 | 1 | 1 |

In a possible implementation, under the method 2, the fourth transmit power is determined based on the maximum transmit power of the terminal, the second path loss, and at least one of the following: the second expected received power on a single RB, the second path loss compensation factor, the quantity of RBs occupied by the communication signal, and the second subcarrier configuration factor.

When both the first communications apparatus and the second communications apparatus are terminals, the second path loss may include a sidelink path loss and a downlink path loss, or may include a path loss between the first communications apparatus and the second communications apparatus (that is, between terminals) and a path loss between the first communications apparatus and a RAN node. For example, the second path loss may include *PL_{D}* in relationship (3) and *PL_{SL}* in relationship (4), and the fourth transmit power may be determined based on relationships (2), (3), and (4). Alternatively, the fourth transmit power may be determined based on relationships (2), (3), (4), and (5).

The second expected received power on a single RB may include *P*_{O*,D*} in relationship (3) and *P*_{O,*SL*} in relationship (4). The second path loss compensation factor may include *α_{D}* in relationship (3) and *α_{SL}* in relationship (4). The quantity of RBs occupied by the communication signal may be ${M}_{RB}^{PSSCH} \left(i\right)$ in relationships (3) and (4). The second subcarrier configuration factor may be *µ* in relationships (3) and (4). Reference may be made to the foregoing related descriptions, and details are not described again.

In a possible implementation, determining, by the first communications apparatus, the first transmit power and the second transmit power may include determining, by the first communications apparatus, the third transmit power and the fourth transmit power. When a sum of the third transmit power and the fourth transmit power is greater than the maximum transmit power of the terminal, the first communications apparatus adjusts the first power control factor or the second power control factor, so that a sum of the first transmit power and the second transmit power is less than or equal to the maximum transmit power of the terminal. That is, *βₛₑₙₛₑ* or *β_{comm}* is adjusted, so that: ${β}_{sense} ⋅ {P}_{sense} \left(i\right) + {β}_{comm} ⋅ {P}_{comm} \left(i\right) \leq {P}_{CMAX}$ (12).
where *βₛₑₙₛₑ* represents the first power control factor, *β_{comm}* represents the second power control factor, *Pₛₑₙₛₑ*(*i*) represents the third transmit power, *P_{comm}*(*i*) represents the fourth transmit power, and *P_{CMAX}* represents the maximum transmit power of the terminal. For ease of description, the first transmit power is denoted as *P_{sense_T}*(*i*) below, that is, *βₛₑₙₛₑ* · *Pₛₑₙₛₑ*(*i*) = *P*_{*sense*_*T*}(*i*); and the second transmit power is denoted as *P*_{*comm*_*T*}(*i*) below, that is, *β_{comm}* · *P_{comm}*(*i*) = *P*_{*comm*_*T*}(*i*).

As a possible implementation, when the sensing priority is higher than the communication priority, the first power control factor may be absent, or the first power control factor may have a value of 1. In this case, relationship (12) may be transformed into: *Pₛₑₙₛₑ*(*i*) + *β_{comm} · P_{comm}*(*i*) ≤ *P_{CMAX}* When the communication priority is higher than the sensing priority, the second power control factor may be absent, or the second power control factor may have a value of 1. In this case, relationship (12) may be transformed into: *βₛₑₙₛₑ · Pₛₑₙₛₑ*(*i*) + *P_{comm}*(*i*) ≤ *P_{CMAX}*.

As a possible implementation, *βₛₑₙₛₑ* ∈ {0, 0.1, 0.2, 0.3, 0.4, 0.5, 0.6, 0.7, 0.8, 0.9, 1}, and/or *β_{comm}* ∈ {0, 0.1, 0.2, 0.3, 0.4, 0.5, 0.6, 0.7, 0.8, 0.9, 1}.

In a first possible implementation, when the communication priority is higher than the sensing priority, the first communications apparatus adjusts the first power control factor. In this embodiment of this application, the communication priority may also be referred to as a data priority, and the two may be used interchangeably.

As an example, when the communication priority is higher than the sensing priority, the second power control factor satisfies *β_{comm}* = 1, and the second transmit power is equal to the fourth transmit power, that is, *P*_{*comm*_*T*}(*i*) = *P_{comm}*(*i*). In this case, relationship (12) is transformed into: *βₛₑₙₛₑ · Pₛₑₙₛₑ*(*i*) + *P_{comm}*(*i*) ≤ *P_{CMAX}.* The first transmit power is the maximum transmit power of the terminal minus the second transmit power, that is, *P_{senseT}*(*i*) = *P_{CMAX}* - *β_{comm} · P_{comm}*(*i*), and the first power control adjustment factor is a ratio of the first transmit power to the third transmit power, that is, *βₛₑₙₛₑ* = *P*_{*sense*_*T*}(*i*)/*Pₛₑₙₛₑ*(*i*).

As another example, when the communication priority is higher than the sensing priority, the second power control factor satisfies *β_{comm}* < 1. In this case, the first communications apparatus may select the first power control factor. If the selected first power control factor causes *βₛₑₙₛₑ · Pₛₑₙₛₑ*(*i*) + *β_{comm}* · *P_{comm}*(*i*) *> P_{CMAX},* the first communications apparatus reduces the value of the first power control factor until *βₛₑₙₛₑ · Pₛₑₙₛₑ*(*i*) + *β_{comm} · P_{comm}*(*i*) ≤ *P_{CMAX}.*

Optionally, if a protocol predefines or a RAN node preconfigures minimum transmit power *P_{sense_th}* of the sensing signal, when the communication priority is higher than the sensing priority and the first transmit power determined in the foregoing adjustment manner is less than the minimum transmit power of the sensing signal, that is, *P*_{*sense*_*T*}(*i*) < *P*_{*sense*_*th*}, the first transmit power is adjusted to the minimum transmit power *P_{sense_th}* of the sensing signal. In this case, the second transmit power is correspondingly adjusted to *β_{comm} · P_{comm}*(*i*) - (*P_{sense_th}* - *P_{sense_T}*(*i*)).

Optionally, when the communication priority is higher than the sensing priority, if a difference obtained by subtracting the third transmit power from the fourth transmit power is greater than or equal to threshold *P_{th_a}*, the second transmit power is equal to the fourth transmit power, that is, *P_{comm_T}*(*i*) = *P_{comm}*(*i*), and the second power control factor satisfies *β_{comm}* = 1. In this case, the first transmit power satisfies *P_{sense_T}*(*i*) = *P_{CMAX} - β_{comm}* · *P_{comm}*(*i*) *- P_{th_a},* where *β_{comm}* = 1. Therefore, *βₛₑₙₛₑ* = *P_{sense_T}*(*i*)/*Pₛₑₙₛₑ*(*i*).

In addition, if a sum of the fourth transmit power and threshold *P_{th_a}* is greater than or equal to the maximum transmit power of the terminal, that is, *P_{comm}*(*i*) *+ P_{th_a}* ≥ *P_{CMAX},* then *P_{sense_T}*(*i*) = 0; namely, the sensing signal may not be transmitted.

In a second possible implementation, when the sensing priority is higher than the communication priority, the first communications apparatus adjusts the second power control factor.

As an example, when the sensing priority is higher than the communication priority, the first power control factor satisfies *βₛₑₙₛₑ* = 1, and the first transmit power is equal to the third transmit power, that is, *P_{sense_T}* = *Pₛₑₙₛₑ*(*i*). In this case, relationship (12) is transformed into: *Pₛₑₙₛₑ*(*i*) + *β_{comm}* · *P_{comm}*(*i*) ≤ *P_{CMAX}.* The second transmit power is the maximum transmit power of the terminal minus the first transmit power, that is, *P_{comm_T}*(*i*) = *P_{CMAX}* - *βₛₑₙₛₑ · Pₛₑₙₛₑ*(*i*), and the second power control adjustment factor is a ratio of the second transmit power to the fourth transmit power, that is, *β_{comm}* = *P_{commT}*(*i*)/*P_{comm}*(*i*).

As another example, when the sensing priority is higher than the communication priority, the first power control factor satisfies *βₛₑₙₛₑ* < 1. In this case, the first communications apparatus may select the second power control factor. If the selected second power control factor causes *βₛₑₙₛₑ · Pₛₑₙₛₑ*(*i*) + *β_{comm}* · *P_{comm}*(*i*) > *P_{CMAX},* the first communications apparatus reduces the value of the second power control factor until *βₛₑₙₛₑ · Pₛₑₙₛₑ*(*i*) + *β_{comm} · P_{comm}*(*i*) ≤ *P_{CMAX}*.

Optionally, if a protocol predefines or a RAN node preconfigures minimum transmit power *P_{comm_th}* of the communication signal, when the sensing priority is higher than the communication priority and the second transmit power determined in the foregoing adjustment manner is less than the minimum transmit power of the communication signal, that is, *P_{comm}__{T}*(*i*) < *P_{comm_th},* the second transmit power is adjusted to the minimum transmit power *P_{comm_th}* of the communication signal. In this case, the first transmit power is correspondingly adjusted to *βₛₑₙₛₑ* · *Pₛₑₙₛₑ*(*i*) - (*P_{comm_th}* - *P_{comm_T}*(*i*)).

Optionally, when the sensing priority is higher than the communication priority, if a difference obtained by subtracting the fourth transmit power from the third transmit power is greater than or equal to threshold *P_{th_b},* the first transmit power is equal to the third transmit power, that is, *P_{sense_T}* = *Pₛₑₙₛₑ*(*i*), and the first power control factor satisfies *βₛₑₙₛₑ* = 1. In this case, the second transmit power satisfies *P_{commT}*(*i*) = *P_{CMAX}* - *βₛₑₙₛₑ · Pₛₑₙₛₑ*(*i*) *- P_{th_b}*, where *βₛₑₙₛₑ* = 1. Therefore, *β_{comm}* = *P_{comm_T}*(*i*)/*P_{comm}*(*i*).

In addition, if a sum of the third transmit power and threshold *P*_{*th*_*b*} is greater than or equal to the maximum transmit power of the terminal, that is, *Pₛₑₙₛₑ*(*i*) *+ P_{th_b}* ≥ *P_{CMAX},* then *P_{comm_T}*(*i*) = 0; namely, the communication signal may not be transmitted.

In a possible implementation, the determining, by the first communications apparatus, a first transmit power and a second transmit power may include: the first communications apparatus determining a third transmit power and a fourth transmit power. When the sum of the third transmit power and the fourth transmit power is less than or equal to the maximum transmit power of the terminal, the first power control factor and the second power control factor may both be 1, that is, the first transmit power is equal to the third transmit power, and the second transmit power is equal to the fourth transmit power.

Further, if a sum of the third transmit power, the fourth transmit power, and threshold *P_{th_A}* is less than or equal to the maximum transmit power of the terminal, that is, *Pₛₑₙₛₑ*(*i*) + *P_{comm}*(*i*) *+ P_{th_A}*≤*P_{CMAX},* the first transmit power is equal to the third transmit power, and the second transmit power is equal to the fourth transmit power. That is, *P_{sense_T}* = *Pₛₑₙₛₑ*(*i*), and *P_{comm_T}*(*i*) = *P_{comm}*(*i*)*.*

Alternatively, if *Pₛₑₙₛₑ*(*i*) + *P_{comm}*(*i*)≤*P_{CMAX},* but *Pₛₑₙₛₑ*(*i*) + *P_{comm}*(*i*) *+ P_{th_A}*>*P_{CMAX},* and the communication priority is higher than the sensing priority, the second transmit power is equal to the fourth transmit power, and the first transmit power is *P_{CMAX}* - *P_{comm}*(*i*) *- P_{th_A}.* In this case, the second power control factor may also be considered equal to 1, and the first power control factor may be considered equal to a ratio of the first transmit power to the third transmit power.

Alternatively, if *Pₛₑₙₛₑ*(*i*) + *P_{comm}*(*i*)≤*P_{CMAX},* but *Pₛₑₙₛₑ*(*i*) + *P_{comm}*(*i*) *+ P_{th_A}*>*P_{CMAX},* and the sensing priority is higher than the communication priority, the first transmit power is equal to the third transmit power, and the second transmit power is *P_{CMAX}* - *Pₛₑₙₛₑ*(*i*) *- P_{th_A}.* In this case, the first power control factor may also be considered equal to 1, and the second power control factor may be considered equal to a ratio of the second transmit power to the fourth transmit power.

In a possible implementation, when the sensing priority is higher than the communication priority, the first transmit power minus the second transmit power is greater than or equal to the first threshold. When the communication priority is higher than the sensing priority, the second transmit power minus the first transmit power is greater than or equal to the second threshold. For example, the first transmit power and the second transmit power may be adjusted by using the foregoing method for determining the first transmit power and the second transmit power, so that the first transmit power and the second transmit power meet the relationship.

The first threshold and the second threshold may be the same or different. The first threshold and the second threshold may be predefined in a protocol, or may be configured by a RAN node or a control node. This is not specifically limited in this application.

Based on this solution, a difference between the transmit power of the high-priority signal and the transmit power of the low-priority signal can be ensured to be greater than or equal to the threshold, thereby reducing interference of the low-priority signal to the high-priority signal and ensuring transmission performance of the high-priority signal.

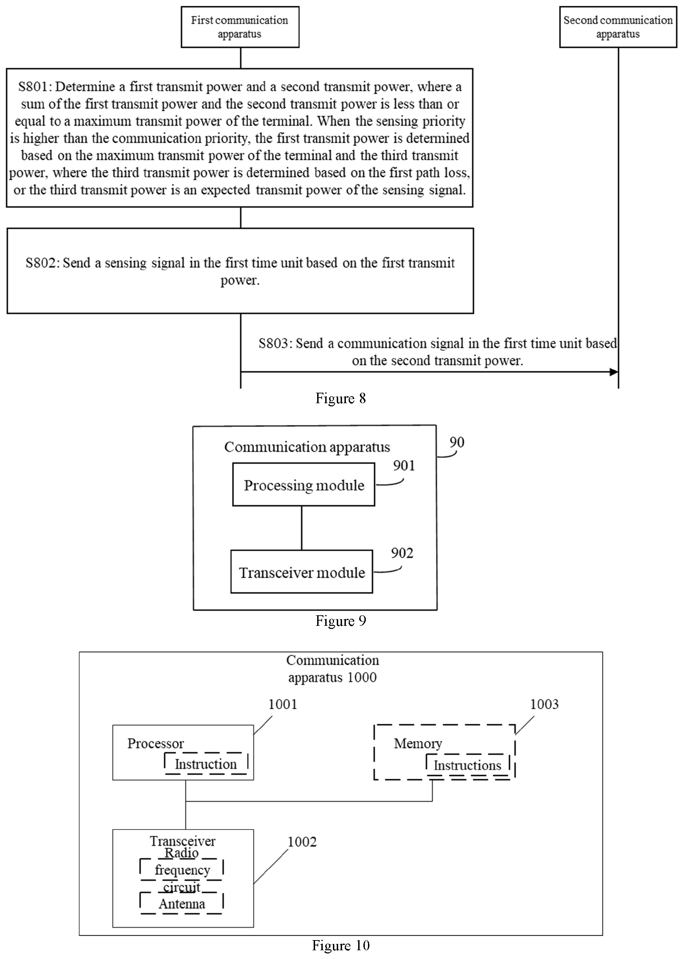

In addition to the power control method shown in FIG. 7, this application further provides a power control method. As shown in FIG. 8, the power control method includes the following steps:
S801: The first communications apparatus determines a first transmit power and a second transmit power.

A sum of the first transmit power and the second transmit power is less than or equal to a maximum transmit power of the terminal. The first transmit power may be understood as a transmit power of a sensing signal, and the second transmit power may be understood as a transmit power of a communication signal. It may be understood that the first communications apparatus is the terminal. The maximum transmit power of the terminal is the maximum transmit power of the first communications apparatus.

In a possible implementation, when the sensing priority is higher than the communication priority, the first transmit power is determined based on the maximum transmit power of the terminal and the third transmit power. The second transmit power is a difference between the maximum transmit power of the terminal and the first transmit power. For example, the first communications apparatus may first determine the first transmit power based on the maximum transmit power of the terminal and the third transmit power, and then determine the difference between the maximum transmit power of the terminal and the first transmit power as the second transmit power.

The third transmit power is determined based on the first path loss. For example, the first path loss may be a sensing path loss or a path loss of a sensing link. A specific manner of determining the third transmit power will be described in subsequent embodiments, and details are not described herein again.

Alternatively, the third transmit power is an expected transmit power of the sensing signal, or the third transmit power is an expected transmit power of the sensing signal (by the sensing signal transmitter or the sensing signal receiver), or the third transmit power is a transmit power requirement of the sensing signal. In this case, the third transmit power may be configured at a higher layer.

In another possible implementation, when the communication priority is higher than the sensing priority, the first transmit power is a difference between the maximum transmit power of the terminal and the second transmit power. The second transmit power is determined based on the maximum transmit power of the terminal and the second path loss, where the second path loss may be a communication path loss. For example, the first communication apparatus may first determine the second transmit power based on the maximum transmit power of the terminal and the second path loss, and then determine the difference between the maximum transmit power of the terminal and the second transmit power as the first transmit power.

In a possible implementation, implementations of the first transmit power, the second transmit power, and the third transmit power in the method shown in FIG. 8 are respectively similar to implementations of the third transmit power, the fourth transmit power, and the fifth transmit power in the method shown in FIG. 7. For these implementations, refer to the related descriptions of the third transmit power, the fourth transmit power, and the fifth transmit power in the method shown in FIG. 7.

S802: The first communications apparatus sends a sensing signal on the first time unit based on the first transmit power.

S803: The first communications apparatus sends a communication signal on the first time unit based on the second transmit power. Correspondingly, the second communications apparatus receives the communication signal on the first time unit. That is, the first communications apparatus also functions as a transmit end of the communication signal, and the second communications apparatus functions as a receive end of the communication signal.

For implementation of steps S802 and S803, refer to the related descriptions of the foregoing steps S702 and S703, and details are not described herein again.

Based on this solution, the first communications apparatus may determine the transmit power of the sensing signal, thereby implementing the sending of the sensing signal. In addition, the first communications apparatus preferentially determines the transmit power of the high-priority signal based on the priority, and uses the remaining power as the transmit power of the low-priority signal, so that a sum of the first transmit power and the second transmit power meets the maximum transmit power constraint of the terminal, thereby implementing simultaneous sending of the sensing signal and the communication signal, and meeting a requirement for performing sensing and communication at the same time.

The overall procedure of the power control method provided in this application has been described above. The following provides a detailed description of the manner of determining the first transmit power when the sensing priority is higher than the communication priority. For example, the first transmit power may be determined in the following two manners:

Manner A: The first transmit power is determined based on the maximum transmit power of the terminal and the third transmit power. The first transmit power satisfies the following relationship: ${P}_{sense} \left(i\right) = min \left({P}_{CMAX}, {P}_{sense , PL}\left(i\right)\right)$ (13)
where *Pₛₑₙₛₑ*(*i*) represents the first transmit power, *i* represents an index of the first time unit, *P_{CMAX}* represents the maximum transmit power of the terminal, *P_{sense,PL}*(*i*) represents the third transmit power, and min() represents a minimum-value operation.

In a possible implementation, when the first communications apparatus is a terminal and the second communications apparatus is a RAN node, or when the first communications apparatus belongs to an integrated system for uplink communication and sensing, the first communications apparatus determines the first transmit power in manner A.

In a possible implementation, when the third transmit power is determined based on the first path loss, the third transmit power may be determined based on the first path loss and at least one of the following: first expected received power on a single RB, first path loss compensation factor, a quantity of RBs occupied by the sensing signal, a first subcarrier configuration factor, or a first closed-loop power control parameter.

For example, the third transmit power may meet the following relationship: ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense} + {f}_{sense}$ (14)
where *P*_{*sense*,*PL*}(*i*) represents the third transmit power, *i* represents an index of the first time unit, *P*_{0,*sense*} represents first expected received power on a single RB, *µ*1 represents the first subcarrier configuration factor, ${M}_{RB}^{sense} \left(i\right)$ represents a quantity of RBs occupied by the sensing signal in time unit *i* (that is, the first time unit), *αₛₑₙₛₑ* represents the first path loss compensation factor, *PL*_{*s*ense} represents the first path loss or an estimate of the first path loss, and *fₛₑₙₛₑ* represents the first closed-loop power control parameter.

For a specific implementation of the third transmit power, refer to the related description of the fifth transmit power in Manner 1 of the method shown in FIG. 7. Details are not described herein again.

Manner B: The first transmit power is determined based on the maximum transmit power of the terminal, the third transmit power, and the fourth transmit power. The first transmit power satisfies the following relationship: ${P}_{sense} \left(i\right) = min \left({P}_{CMAX},{P}_{sense , C},{P}_{sense , PL}\left(i\right)\right)$ (15)
where *Pₛₑₙₛₑ*(*i*) represents the first transmit power, *i* represents an index of the first time unit, *P_{CMAX}* represents the maximum transmit power of the terminal, *P_{sense,PL}*(*i*) represents the third transmit power, *P_{sense,C}* represents the fourth transmit power, and min() represents a minimum-value operation.

In a possible implementation, when both the first communications apparatus and the second communications apparatus are terminals, or when the first communications apparatus belongs to a sidelink/D2D communication and sensing integrated system, the first communications apparatus determines the first transmit power in this manner B.

In a possible implementation, when the third transmit power is determined based on the first path loss, the third transmit power may be determined based on the first path loss and at least one of the following: first expected received power on a single RB, first path loss compensation factor, a quantity of RBs occupied by the sensing signal, or a first subcarrier configuration factor. For example, the third transmit power may satisfy the following relationship: ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense}$ (16)
where *P*_{*sense*,*PL*}(*i*) represents the third transmit power, *i* represents an index of the first time unit, *P*_{0,*sense*} represents first expected received power on a single RB, *µ*1 represents the first subcarrier configuration factor, ${M}_{RB}^{sense} \left(i\right)$ represents a quantity of RBs occupied by the sensing signal in time unit *i*, *αₛₑₙₛₑ* represents the first path loss compensation factor, *PLₛₑₙₛₑ* represents the first path loss, and *fₛₑₙₛₑ* represents the first closed-loop power control parameter.

For a specific implementation of the third transmit power, refer to the related description of the fifth transmit power in Manner 2 of the method shown in FIG. 7. Details are not described herein again.

In a possible implementation, the fourth transmit power is determined based on at least one of the CBR, the CR, or the sensing priority. For a specific implementation of the fourth transmit power, refer to the related description of the sixth transmit power in Manner 2 of the method shown in FIG. 7. Details are not described herein again.

As a possible implementation, in either of the manner A or manner B, when the sensing priority is higher than the communication priority, the second transmit power satisfies the following relationship: ${P}_{comm} \left(i\right) = {P}_{CMAX} - {P}_{sense} \left(i\right)$ (17)
where *P_{comm}*(*i*) represents the second transmit power, *P_{CMAX}* represents the maximum transmit power of the terminal, and *Pₛₑₙₛₑ*(*i*) represents the first transmit power.

As another possible implementation, when the sensing priority is higher than the communication priority in the manner A or manner B, the second transmit power may be 0, that is, it may be considered that no communication signal is sent.

When the communication priority is higher than the sensing priority, the second transmit power may be determined in the following two manners:
Manner a: The second transmit power is determined based on the maximum transmit power of the terminal, the second path loss, and at least one of the following: second expected received power on a single RB, second path loss compensation factor, a quantity of RBs occupied by the communication signal, a second subcarrier configuration factor, a second closed-loop power control parameter, or a power offset value, where the second expected received power on a single RB is determined based on the maximum transmit power of the terminal. The power offset value is determined by the MCS of the communication signal.

For specific implementations of the second path loss and the second transmit power, refer to the related descriptions of the second path loss and the fourth transmit power in Manner 1 of the method shown in FIG. 7. Details are not described herein again.

Manner b: The second transmit power is determined based on the maximum transmit power of the terminal, the second path loss, and at least one of the following: second expected received power on a single RB, second path loss compensation factor, a quantity of RBs occupied by the communication signal, and a second subcarrier configuration factor.

For specific implementations of the second path loss and the second transmit power, refer to the related descriptions of the second path loss and the fourth transmit power in Manner 2 of the method shown in FIG. 7. Details are not described herein again.

In a possible implementation, when the communication priority is higher than the sensing priority in manner a or manner b, the first transmit power satisfies the following relationship: ${P}_{sense} \left(i\right) = {P}_{CMAX} - {P}_{comm} \left(i\right)$ (18)
where *Pₛₑₙₛₑ*(*i*) represents the first transmit power, *P_{CMAX}* represents the maximum transmit power of the terminal, and *P_{comm}*(*i*) represents the second transmit power.

In another possible implementation, when the communication priority is higher than the sensing priority in manner A or manner B, the first transmit power may be 0, that is, it may be considered that no sensing signal is sent.

In a possible implementation, when the sensing priority is higher than the communication priority, the first transmit power minus the second transmit power is greater than or equal to the first threshold. When the communication priority is higher than the sensing priority, the second transmit power minus the first transmit power is greater than or equal to the second threshold. The first threshold and the second threshold may be the same or different. The first threshold and the second threshold may be predefined in a protocol, or may be configured by the RAN node or the control node. This is not specifically limited in this application.

For example, after the first transmit power and the second transmit power are determined by using the foregoing method, the first transmit power or the second transmit power may be further adjusted, for example, multiplied by a power control factor, so that the first transmit power and the second transmit power that are respectively used when the sensing signal and the communication signal are finally sent meet the relationship that the difference between the first transmit power and the second transmit power is greater than or equal to the threshold.

Based on this solution, a difference between the transmit power of the high-priority high signal and the transmit power of the low-priority signal can be ensured to be greater than or equal to the threshold, thereby reducing interference of the low-priority signal to the high-priority signal and ensuring transmission performance of the high-priority signal.

The foregoing has described the method provided in this application. In addition, this application further provides a communication apparatus configured to implement the functions described in the foregoing method embodiments.

It may be understood that, to implement the foregoing functions, the communication apparatus includes corresponding hardware structures and/or software modules for performing each function. A person skilled in the art should easily be aware that, in combination with the units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art can use different methods to implement the described functions for each particular application, but it should not be considered that the implementation goes beyond the scope of this application.

In embodiments of this application, the communication apparatus may be divided into function modules based on the foregoing method embodiments. For example, each function module may be obtained through division based on each corresponding function, or two or more functions may be integrated into one processing module. The integrated module may be implemented in a form of hardware, or may be implemented in a form of a software functional module. It should be noted that the module division in embodiments of this application is an example, and is merely a logical function division, and may be other division in an actual implementation.

Figure 9 of the communication apparatus shows a schematic structural diagram of a communication apparatus 90. The communication apparatus 90 includes a processing module 901 and a transceiver module 902. The communication apparatus 90 may be configured to implement the functions of the first communication apparatus or the second communication apparatus.

In some embodiments, the communication apparatus 90 may further include a storage module (not shown in FIG. 9), configured to store program instructions and data.

In some embodiments, the transceiver module 902 may also be referred to as a transceiver unit, configured to implement a sending and/or receiving function. The transceiver module 902 may be formed by a transceiver circuit, a transceiver machine, a transceiver, or a communication interface.

In some embodiments, the transceiver module 902 may include a receiving module and a sending module, which are respectively configured to perform receive and send steps performed by the first communication apparatus or the second communication apparatus in the foregoing method embodiments, and/or configured to support other processes of the technology described in this specification; and the processing module 901 may be configured to perform processing steps performed by the first communication apparatus or the second communication apparatus in the foregoing method embodiments, and/or configured to support other processes of the technology described in this specification.

When the communication apparatus 90 is configured to implement the functions of the first communication apparatus, in a possible implementation:
The processing module 901 is configured to determine a first transmit power and a second transmit power. The transceiver module 902 is configured to send a sensing signal on a first time unit based on the first transmit power. The transceiver module 902 is further configured to send a communication signal on the first time unit based on the second transmit power, where a sum of the first transmit power and the second transmit power is less than or equal to a maximum transmit power of the terminal. The first transmit power is a product of a first power control factor and a third transmit power, and the second transmit power is a product of a second power control factor and a fourth transmit power. The third transmit power is determined based on the maximum transmit power of the terminal and a fifth transmit power, where the fifth transmit power is determined based on the first path loss, or the fifth transmit power is an expected transmit power of the sensing signal. The fourth transmit power is determined based on the maximum transmit power of the terminal and a second path loss.

Optionally, when the sum of the third transmit power and the fourth transmit power is greater than the maximum transmit power of the terminal and the communication priority is higher than the sensing priority, the determining module 901 is configured to determine the first transmit power, where the determining module 901 is specifically configured to adjust the first power control factor, so that the sum of the first transmit power and the second transmit power is less than or equal to the maximum transmit power of the terminal. Alternatively, when the sum of the third transmit power and the fourth transmit power is greater than the maximum transmit power of the terminal and the communication priority is lower than the sensing priority, the determining module 901 is configured to determine the second transmit power, where the determining module 901 is specifically configured to adjust the second power control factor, so that the sum of the first transmit power and the second transmit power is less than or equal to the maximum transmit power of the terminal.

When the communications apparatus 90 is configured to implement the functions of the first communications apparatus, in another possible implementation:
The processing module 901 is configured to determine the first transmit power and the second transmit power. The transceiver module 902 is configured to send a sensing signal in the first time unit based on the first transmit power; and the transceiver module 902 is further configured to send a communication signal in the first time unit based on the second transmit power, where the sum of the first transmit power and the second transmit power is less than or equal to the maximum transmit power of the terminal. When the sensing priority is higher than the communication priority, the first transmit power is determined based on the maximum transmit power of the terminal and the third transmit power, where the third transmit power is determined based on the first path loss, or the third transmit power is an expected transmit power of the sensing signal, and the second transmit power is a difference between the maximum transmit power of the terminal and the first transmit power. Alternatively, when the communication priority is higher than the sensing priority, the first transmit power is a difference between the maximum transmit power of the terminal and the second transmit power, where the second transmit power is determined based on the maximum transmit power of the terminal and the second path loss.

All related content of the steps in the foregoing method embodiments may be referenced in the function descriptions of the corresponding functional modules, and details are not described herein again.

In this application, the communication apparatus 90 may be presented in a form of dividing the communication apparatus 90 into functional modules in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, when the communication apparatus 90 in FIG. 9 is a chip or a chip system, a function/implementation process of the transceiver module 902 may be implemented by an input/output interface (or a communication interface) of the chip or the chip system, and a function/implementation process of the processing module 901 may be implemented by a processor (or a processing circuit) of the chip or the chip system.

Since the communication apparatus 90 provided in this embodiment can perform the foregoing method, the technical effects that can be achieved thereby may be referred to in the foregoing method embodiments, and details are not repeated herein again.

As a possible product form, the first communication apparatus or the second communication apparatus described in the embodiments of this application may be implemented by using one or more of the following: one or more field programmable gate arrays (FPGA), programmable logic devices (PLD), controllers, state machines, gate logic, discrete hardware components, any other suitable circuit, or any combination of circuits capable of performing the various functions described throughout this application.

As another possible product form, the first communication apparatus or the second communication apparatus described in the embodiments of this application may be implemented using a general bus architecture. For ease of illustration, refer to FIG. 10, which is a schematic structural diagram of a communication apparatus 1000 according to an embodiment of this application. The communication apparatus 1000 includes a processor 1001 and a transceiver 1002. The communication apparatus 1000 may be the first communication apparatus, or a chip or a chip system thereof; or the communication apparatus 1000 may be the second communication apparatus, or a chip or a module thereof. FIG. 10 shows only main components of the communication apparatus 1000. In addition to the processor 1001 and the transceiver 1002, the communication apparatus may further include a memory 1003, and an input/output apparatus (not shown in the figure).

Optionally, the processor 1001 is mainly configured to process communication protocols and communication data, control the entire communication apparatus, execute software programs, and process data of the software programs, thereby implementing the methods provided in the foregoing method embodiments. The memory 1003 is mainly configured to store software programs and data. The transceiver 1002 may include a radio frequency circuit and an antenna, where the radio frequency circuit is mainly configured to perform conversion between a baseband signal and a radio frequency signal, and process the radio frequency signal. The antenna is mainly configured to receive and transmit radio frequency signals in the form of electromagnetic waves. The input/output device, such as a touchscreen, display, or keyboard, is mainly configured to receive data input by a user and output data to the user.

Optionally, the processor 1001, the transceiver 1002, and the memory 1003 may be connected through a communication bus.

When the communication device is powered on, the processor 1001 may read the software program from the memory 1003, interpret and execute instructions of the software program, and process data of the software program. When data needs to be sent wirelessly, the processor 1001 performs baseband processing on the data to be sent, and then outputs a baseband signal to the radio frequency circuit. The radio frequency circuit performs radio frequency processing on the baseband signal and then sends the radio frequency signal in the form of electromagnetic waves through an antenna. When data is received by the communication device, the radio frequency circuit receives the radio frequency signal through the antenna, converts the radio frequency signal into a baseband signal, and outputs the baseband signal to the processor 1001. The processor 1001 then converts the baseband signal into data and processes the data.

In another implementation, the radio frequency circuit and the antenna may be disposed independently of a processor performing baseband processing. For example, in a distributed scenario, the radio frequency circuit and the antenna may be disposed in a remote manner independent of the communications apparatus.

In some embodiments, in terms of hardware implementation, a person skilled in the art may figure out that the communication apparatus 90 may be implemented in a form of the communication apparatus 1000 shown in FIG. 10.

In an example, the function/implementation process of the processing module 901 in FIG. 9 may be implemented by the processor 1001 in the communication apparatus 1000 shown in FIG. 10 by invoking the computer-executable instructions stored in the memory 1003. The function/implementation process of the transceiver module 902 in FIG. 9 may be implemented by the transceiver 1002 in the communication apparatus 1000 shown in FIG. 10.

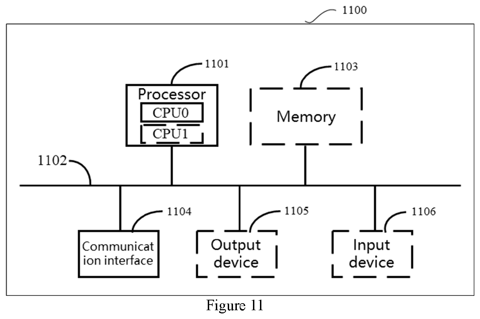

As yet another possible product form, the first communication apparatus or the second communication apparatus in this application may use the composition structure shown in FIG. 11 or include the components shown in FIG. 11. FIG. 11 is a schematic diagram of composition of a communication apparatus 1100 according to this application. The communication apparatus 1100 may be a chip or a system on chip in the first communication apparatus or the second communication apparatus; or may be a module, a chip, or a system on chip in the second communication apparatus or the second communication apparatus.

As shown in Figure 11, the communication apparatus 1100 includes at least one processor 1101 and at least one communication interface (in Figure 11, an example is illustrated where the communication apparatus includes one communication interface 1104 and one processor 1101). Optionally, the communication apparatus 1100 may further include a communication bus 1102 and a memory 1103.

The processor 1101 may be a general-purpose central processing unit (CPU), a general-purpose processor, a network processor (NP), a digital signal processor (DSP), a microprocessor, a microcontroller, a PLD, or any combination thereof. The processor 1101 may also be another apparatus with processing functions, such as a circuit, an apparatus, or a software module, without any limitation.

The communication bus 1102 is configured to connect different components in the communication apparatus 1100, so that the different components can communicate with each other. The communication bus 1102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The communication interface 1104 is configured to communicate with another device or a communication network. For example, the communication interface 1104 may be a module, a circuit, a transceiver, or any apparatus that can implement communication. Optionally, the communication interface 1104 may alternatively be an input/output interface located inside the processor 1101, configured to implement signal input and signal output of the processor.

The memory 1103 may be an apparatus having a storage function, and is configured to store instructions and/or data. The instruction may be a computer program.

For example, the memory 1103 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic disk storage medium, or another magnetic storage device. This is not limited.

It should be noted that the memory 1103 may exist independently of the processor 1101, or may be integrated with the processor 1101. The memory 1103 may be located inside the communication apparatus 1100, or may be located outside the communication apparatus 1100, which is not limited. The processor 1101 may be configured to execute the instructions stored in the memory 1103, to implement the methods provided in the following embodiments of this application.

In an optional implementation, the communication apparatus 1100 may further include an output device 1105 and an input device 1106. The output device 1105 communicates with the processor 1101, and may display information in a plurality of manners. For example, the output device 1105 may be a liquid crystal display (liquid crystal display, LCD), a light emitting diode (light emitting diode, LED) display device, a cathode ray tube (cathode ray tube, CRT) display device, a projector (projector), or the like. The input device 1106 communicates with the processor 1101, and may receive user input in a plurality of manners. For example, the input device 1106 may be a mouse, a keyboard, a touchscreen device, a sensing device, or the like.

In some embodiments, in terms of hardware implementation, a person skilled in the art may figure out that the communication apparatus 90 shown in FIG. 9 may be implemented in a form of the communication apparatus 1100 shown in FIG. 11.

As an example, the function/implementation process of the processing module 901 in FIG. 9 may be implemented by the processor 1101 in the communication apparatus 1100 shown in FIG. 11 by invoking the computer-executable instructions stored in the memory 1103, and the function/implementation process of the transceiver module 902 in FIG. 9 may be implemented by the communications interface 1104 in the communication apparatus 1100 shown in FIG. 11.

It should be noted that the structure shown in FIG. 11 does not constitute a specific limitation on the first communication apparatus or the second communication apparatus. For example, in some other embodiments of this application, the first communication apparatus or the second communication apparatus may include more or fewer components than those shown in the figure, or combine some components, or split some components, or have different component arrangements. The components shown in the figure may be implemented by hardware, software, or a combination of software and hardware.

In some embodiments, an embodiment of this application further provides a communications apparatus, where the communications apparatus includes a processor, configured to implement the method in any one of the foregoing method embodiments.

In a possible implementation, the communication apparatus further includes a memory. The memory is configured to store necessary computer programs and data. The computer program may include an instruction, and the processor may invoke the instruction in the computer program stored in the memory to instruct the communication apparatus to perform the method in any one of the foregoing method embodiments. Certainly, the memory may not be disposed in the communication apparatus.

In another possible implementation, the communication apparatus further includes an interface circuit, where the interface circuit is a code/data read/write interface circuit, and the interface circuit is configured to receive computer-executable instructions (the computer-executable instructions are stored in the memory, and may be directly read from the memory, or may be read through another device) and transmit the computer-executable instructions to the processor.

In still another possible implementation, the communication apparatus further includes a communication interface, where the communication interface is configured to communicate with a module outside the communication apparatus.

It may be understood that the communication apparatus may be a chip or a chip system. When the communication apparatus is a chip system, the chip system may include a chip, or may include a chip and another discrete component. This is not specifically limited in embodiments of this application.

This application further provides a computer-readable storage medium, where a computer program or instructions are stored thereon, and when the computer program or the instructions are executed by a computer, the functions of any one of the foregoing method embodiments are implemented.

This application further provides a computer program product, where when the computer program product is executed by a computer, the functions of any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and methods described in this application may also be implemented in other manners. For example, the described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, that is, may be located in one place, or may be distributed on a plurality of network units. The parts displayed as units may or may not be physical units. Some or all of the units may be selected according to an actual need to achieve the objectives of the solutions in this embodiment.

In addition, functional units in embodiments of this application may be integrated into one processing unit, or each of the units may exist alone physically, or two or more units may be integrated into one unit.

The foregoing embodiments may be implemented entirely or partially by software, hardware, firmware, or any combination thereof. When the embodiments are implemented using a software program, they may be implemented entirely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like. The computer in the embodiments of this application may include the apparatuses described above.

Although embodiments of this application are described with reference to the present disclosure, during the implementation of this application as claimed, a person skilled in the art may understand and implement other variations of the disclosed embodiments by viewing the accompanying drawings, the disclosed content, and the appended claims. In the claims, the term "comprising" (comprising) does not exclude other components or steps, and the use of the term "a" or "one" does not preclude the presence of more than one such component or step. Several functions listed in the claims may be implemented by a single processor or other unit. Some measures are set forth in dependent claims that are different from each other, but this does not mean that these measures cannot be combined to achieve good effects.

Although this application is described with reference to specific features and embodiments thereof, it is apparent that various modifications and combinations can be made without departing from the scope of this application. Accordingly, this specification and the accompanying drawings are merely example illustrations of this application as defined by the appended claims, and are considered as encompassing any and all modifications, variations, combinations, or equivalents that fall within the scope of this application. It is clear that a person skilled in the art can make various changes and modifications to this application without departing from the scope of this application. Therefore, this application is intended to cover any modifications and variations of this application provided that these modifications and variations fall within the scope of the claims of this application and their equivalent technologies.

## Claims

1. A power control method, comprising:
determining a first transmit power and a second transmit power, wherein a sum of the first transmit power and the second transmit power is less than or equal to a maximum transmit power of a terminal;
transmitting a sensing signal in a first time unit based on the first transmit power;
transmitting a communication signal in the first time unit based on the second transmit power;
the first transmit power is a product of a first power control factor and a third transmit power, and the second transmit power is a product of a second power control factor and a fourth transmit power; the third transmit power is determined based on a maximum transmit power of the terminal and a fifth transmit power, where the fifth transmit power is determined based on a first path loss, or the fifth transmit power is an expected transmit power of a sensing signal; and the fourth transmit power is determined based on the maximum transmit power of the terminal and a second path loss.

2. The method according to claim 1, wherein the third transmit power satisfies the following relationship: ${P}_{sense} \left(i\right) = min \left({P}_{CMAX}, {P}_{sense , PL}\left(i\right)\right)$ where *Pₛₑₙₛₑ*(*i*) represents the third transmit power, *i* represents an index of the first time unit, *P_{CMAX}* represents the maximum transmit power of the terminal, *P*_{*sense*,*PL*}(*i*) represents the fifth transmit power, and min () represents a minimum-value operation.

3. The method according to claim 1, wherein the third transmit power is determined based on a maximum transmit power of the terminal, the fifth transmit power, and a sixth transmit power;
wherein the sixth transmit power is determined based on at least one of a channel busy ratio CBR, a channel occupancy rate CR, or a sensing priority.

4. The method according to claim 3, wherein the third transmit power satisfies the following relationship: ${P}_{sense} \left(i\right) = min \left({P}_{CMAX},{P}_{sense , C},{P}_{sense , PL}\left(i\right)\right)$ where *Pₛₑₙₛₑ*(*i*) represents the third transmit power, *i* represents an index of the first time unit, *P_{CMAX}* represents the maximum transmit power of the terminal, *P*_{*sense*,*PL*}(*i*) represents the fifth transmit power, *P*_{*sense*,*C*} represents the sixth transmit power, and min () represents a minimum-value operation.

5. The method according to any one of claims 1 to 4, wherein the fifth transmit power is determined based on a first path loss and at least one of the following:
a first expected received power on a single resource block RB, a first path loss compensation factor, a quantity of resource blocks RBs occupied by the sensing signal, a first subcarrier configuration factor, or a first closed-loop power control parameter.

6. The method according to claim 5, wherein the fifth transmit power satisfies the following relationship: ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense} + {f}_{sense}$ Or, ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense}$ where *P*_{*sense*,*PL*}(*i*) represents the fifth transmit power, *i* represents an index of the first time unit, *P*_{0,*sense*} represents the first expected received power on a single RB, *µ*1 represents the first subcarrier configuration factor, ${M}_{RB}^{sense} \left(i\right)$ represents a quantity of RBs occupied by the sensing signal in time unit *i, αₛₑₙₛₑ* represents the first path loss compensation factor, *PLₛₑₙₛₑ* represents the first path loss, and *fₛₑₙₛₑ* represents the first closed-loop power control parameter.

7. The method according to any one of claims 1 to 6, wherein the fourth transmit power is determined based on at least one of the following: the maximum transmit power of the terminal, the second path loss, and:
the second expected received power on the single RB, the second path loss compensation factor, the quantity of RBs occupied by the communication signal, the second subcarrier configuration factor, the second closed-loop power control parameter, or a power offset value, wherein the power offset value is determined by a modulation and coding scheme MCS of the communication signal.

8. The method according to any one of claims 1 to 7, wherein when the sum of the third transmit power and the fourth transmit power is greater than the maximum transmit power of the terminal and the communication priority is higher than the sensing priority, the determining a first transmit power comprises:
adjusting the first power control factor, so that the sum of the first transmit power and the second transmit power is less than or equal to the maximum transmit power of the terminal; or
when the sum of the third transmit power and the fourth transmit power is greater than the maximum transmit power of the terminal and the communication priority is lower than the sensing priority, the determining a second transmit power comprises:
adjusting the second power control factor, so that the sum of the first transmit power and the second transmit power is less than or equal to the maximum transmit power of the terminal.

9. The method according to any one of claims 1 to 8, wherein,
When the sensing priority is higher than the communication priority, the first transmit power minus the second transmit power is greater than or equal to a first threshold; or
when the communication priority is higher than the sensing priority, the second transmit power minus the first transmit power is greater than or equal to a second threshold.

10. A power control method, wherein the method comprises:
determining a first transmit power and a second transmit power, wherein a sum of the first transmit power and the second transmit power is less than or equal to a maximum transmit power of a terminal;
sending a sensing signal in a first time unit based on the first transmit power;
transmitting a communication signal on the first time unit based on the second transmit power;
when the sensing priority is higher than the communication priority, the first transmit power is determined based on a maximum transmit power of the terminal and a third transmit power, where the third transmit power is determined based on a first path loss, or the third transmit power is an expected transmit power of a sensing signal, and the second transmit power is a difference between the maximum transmit power of the terminal and the first transmit power;
or when the communication priority is higher than the sensing priority, the first transmit power is a difference between the maximum transmit power of the terminal and the second transmit power, and the second transmit power is determined based on the maximum transmit power of the terminal and a second path loss.

11. The method according to claim 10, wherein the first transmit power satisfies the following relationship: ${P}_{sense} \left(i\right) = min \left({P}_{CMAX}, {P}_{sense , PL}\left(i\right)\right)$ where *Pₛₑₙₛₑ*(*i*) represents the first transmit power, *i* represents an index of the first time unit, *P_{CMAX}* represents the maximum transmit power of the terminal, *P*_{*sense*,*PL*}(*i*) represents the third transmit power, and min() represents a minimum-value operation.

12. The method according to claim 10, wherein the first transmit power is determined based on the maximum transmit power of the terminal, the third transmit power, and a fourth transmit power;
wherein the fourth transmit power is determined based on at least one of a channel busy ratio CBR, a channel utilization rate CR, or a sensing priority.

13. The method according to claim 12, wherein the first transmit power satisfies the following relationship: ${P}_{sense} \left(i\right) = min \left({P}_{CMAX},{P}_{sense , C},{P}_{sense , PL}\left(i\right)\right)$ where *Pₛₑₙₛₑ*(*i*) represents the first transmit power, *i* represents an index of the first time unit, *P_{CMAX}* represents the maximum transmit power of the terminal, *P_{sense,PL}*(*i*) represents the third transmit power, *P_{sense,C}* represents the fourth transmit power, and min() represents a minimum-value operation.

14. The method according to any one of claims 10 to 13, wherein the third transmit power is determined based on a first path loss and at least one of the following:
a first expected received power on a single resource block RB, a first path loss compensation factor, a quantity of resource blocks RBs occupied by the sensing signal, a first subcarrier configuration factor, or a first closed-loop power control parameter.

15. The method according to claim 14, wherein the third transmit power satisfies the following relationship: ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense} + {f}_{sense}$ or, ${P}_{sense , PL} \left(i\right) = {P}_{0 , sense} + 10 {log}_{10} \left({2}^{μ 1}⋅{M}_{RB}^{sense}\left(i\right)\right) + {α}_{sense} ⋅ {PL}_{sense}$ where *P_{sense,PL}*(*i*) represents the third transmit power, *i* represents an index of the first time unit, *P*_{0,*sense*} represents the first expected received power on a single RB, *µ*1 represents the first subcarrier configuration factor, ${M}_{RB}^{sense} \left(i\right)$ represents a quantity of RBs occupied by the sensing signal in time unit *i*, *αₛₑₙₛₑ* represents the first path loss compensation factor, *PL*_{*s*ense} represents the first path loss, and *fₛₑₙₛₑ* represents the first closed-loop power control parameter.

16. The method according to any one of claims 10 to 15, wherein the second transmit power is determined based on at least one of the following, where the at least one is the maximum transmit power of the terminal, the second path loss:
the second expected received power on a single RB, a second path loss compensation factor, the number of RBs occupied by the communication signal, a second subcarrier configuration factor, a second closed-loop power control parameter, or a power offset value, wherein the power offset value is determined by the modulation and coding scheme (MCS) of the communication signal.

17. The method according to any one of claims 10 to 16, wherein when the sensing priority is higher than the communication priority, the second transmit power satisfies the following relationship: ${P}_{comm} \left(i\right) = {P}_{CMAX} - {P}_{sense} \left(i\right)$ Or,
when the communication priority is higher than the sensing priority, the first transmit power satisfies the following relationship: ${P}_{sense} \left(i\right) = {P}_{CMAX} - {P}_{comm} \left(i\right)$
where *P_{comm}*(*i*) represents the second transmit power, *P_{CMAX}* represents the maximum transmit power of the terminal, and *Pₛₑₙₛₑ*(*i*) represents the first transmit power.

18. The method according to any one of claims 10 to 17, wherein
when the sensing priority is higher than the communication priority, the first transmit power minus the second transmit power is greater than or equal to a first threshold; or
when the communication priority is higher than the sensing priority, the second transmit power minus the first transmit power is greater than or equal to a second threshold.

19. A communication apparatus, wherein the communication apparatus comprises a module configured to perform the method according to any one of claims 1 to 9, or the communication apparatus comprises a module configured to perform the method according to any one of claims 10 to 18.20. A communication apparatus, wherein the communication apparatus comprises a processor; and the processor is configured to run a computer program or instruction, so that the communication apparatus performs the method according to any one of claims 1 to 9, or so that the communication apparatus performs the method according to any one of claims 10 to 18.

21. A computer-readable storage medium, wherein the computer-readable storage medium stores computer instructions or a program, and when the computer instructions or the program is run on a computer, the method according to any one of claims 1 to 9 is performed, or the method according to any one of claims 10 to 18 is performed.

22. A computer program product, wherein the computer program product comprises computer instructions; and when some or all of the computer instructions are run on a computer, the method according to any one of claims 1 to 9 is performed, or the method according to any one of claims 10 to 18 is performed.
